# EUROPEAN PATENT SPECIFICATION

(11) **EP 2 181 879 B1**
(45) Date of publication and mention of the grant of the patent: **23.10.2013**
(21) Application number: 08792288.6
(22) Date of filing: 07.08.2008
(51) Int. Cl.: B60K 35/00

(54) **INSTRUMENT PANEL IMAGE FORMING DEVICE, INSTRUMENT PANEL IMAGE FORMING METHOD, VEHICLE, INSTRUMENT PANEL IMAGE DISPLAY DEVICE, INSTRUMENT PANEL IMAGE DISPLAY METHOD, INSTRUMENT PANEL IMAGE FORMING PROGRAM, AND A COMPUTER READABLE RECORDING MEDIUM ON WHICH INSTRUMENT PANEL IMAGE FORMING PROGRAM IS RECORDED**
VORRICHTUNG UND VERFAHREN ZUR BILDERZEUGUNG FÜR EIN ARMATURENBRETT, FAHRZEUG, BILDANZEIGEVORRICHTUNG FÜR ARMATURENBRETT, BILDANZEIGEVERFAHREN FÜR ARMATURENBRETT, PROGRAMM ZUR BILDERZEUGUNG FÜR EIN ARMATURENBRETT UND COMPUTERLESBARES AUFZEICHNUNGSMEDIUM MIT DARAUF GESPEICHERTEM PROGRAMM ZUR BILDERZEUGUNG FÜR EIN ARMATURENBRETT
DISPOSITIF DE FORMATION D'IMAGES DE TABLEAU DE BORD, PROCÉDÉ DE FORMATION D'IMAGES DE TABLEAU DE BORD, DISPOSITIF D'AFFICHAGE DE TABLEAU DE BORD, PROGRAMME DE FORMATION D'IMAGES DE TABLEAU DE BORD, ET SUPPORT D'ENREGISTREMENT LISIBLE PAR ORDINATEUR SUR LEQUEL EST ENREGISTRÉ LE PROGRAMME DE FORMATION D'IMAGES DE TABLEAU DE BORD

(30) Priority: 11.09.2007 JP 2007235958
(43) Date of publication of application: 05.05.2010
(73) Proprietor: Sharp Kabushiki Kaisha, Osaka-shi, Osaka 545-8522 (JP)
(72) Inventor: FUJIMOTO, Fumiaki, Osaka-shi OSAKA 545-8522 (JP); MASUI, Teruhisa, Osaka-shi OSAKA 545-8522 (JP); YODA, Kazuhiko, Osaka-shi OSAKA 545-8522 (JP); NISHIDA, Osamu, Osaka-shi OSAKA 545-8522 (JP); HAMACHI, Jun, Osaka-shi OSAKA 545-8522 (JP); FUJISAWA, Masayuki, Osaka-shi OSAKA 545-8522 (JP)
(74) Representative: Müller-Boré & Partner Patentanwälte
(86) International application number: PCT/JP2008/064181
(87) International publication number: WO 2009/034796

(56) References cited:
- JP-A- 10 297 319
- JP-A- 11 311 545
- JP-A- 2000 238 552
- JP-A- 2001 121 989
- JP-A- 2005 014 659
- US-A1- 2005 012 599

## Description

### Technical Field

The present invention relates to: an instrument panel image forming apparatus, an instrument panel image forming method, a vehicle, an instrument panel image forming program, and a computer-readable storage medium containing an instrument panel image forming program, each of which serves to form an instrument panel image that is displayed on an instrument panel; and an instrument panel image display apparatus and an instrument panel image display method, each of which serves to display an instrument panel image.

### Background Art

In recent years, an instrument panel that is mounted on a vehicle (machine) such as an automobile has been realized by displaying an instrument penal image on a display such as a liquid crystal display. Such a display shows an instrument panel image composed of images of various instruments such as a speedometer, a tachometer, and a fuel gauge.

However, a conventional instrument panel has had such a problem that a user cannot change from displaying one instrument panel images to displaying another.

As a technology to overcome this problem, Patent Literature 1 discloses an instrument panel image selecting apparatus having (i) memory means in which to store plural pieces of instrument panel image data, (ii) selecting means for selecting, from among the plural pieces of instrument panel image data, instrument panel image data according to a selection operation, and for generating a selection signal thereof, and (iii) instrument panel image data output means for outputting, to the instrument panel image display means, the instrument panel image data selected according to the selection signal from among the plural pieces of instrument panel image data stored.

Use of the apparatus of Patent Literature 1 allows a user to select his/her favorite instrument panel image and display it on the instrument panel display means.

Further, Patent Literature 2 discloses a technology for making a judgment about the visibility of an instrument panel image of a user's choice and thereby creating the user's favorite instrument panel image without undermining safety during operation.

### Citation List

Patent Literature 1
   Japanese Patent Application Publication, Tokukaihei, No. 10-297318 A (Publication Date: November 10, 1998)
Patent Literature 2
   Japanese Patent Application Publication, Tokukai, No. 2005-88673 A (Publication Date: April 7, 2005)
Patent Literature 3
   US 2005/0012599 A1 discloses the preambule of claims 1 and 5.

### Summary of Invention

However, since the conventional technologies are both configured such that a particular user who drives a vehicle forms his/her favorite instrument panel image, the instrument panel image so formed may not necessarily satisfy another user who drives the vehicle. Therefore, in cases where a plurality of users use a particular vehicle, there is such a problem that every time a new user replaces his/her predecessor, he/she has to take a lot of trouble with formation of his/her favorite instrument panel image. A method for forming each user's favorite instrument panel image in advance for a particular vehicle and storing it in a memory device located internally in the vehicle is possible here. In such a case, however, there are such problems that the user has to take trouble with an operation, for example, for retrieving his/her favorite instrument panel image from the memory device and, what is more, that his/her favorite instrument panel image may be used or altered by others.

A reconfigurable instrument panel display method and device is known from US 2005/0012599 A1. Further display methods and devices for vehicles are told in JP 2005 014659 A, JP 11 311545 A, and JP 2000 238552 A, for example.

It is an object of the present invention to provide an instrument panel image forming apparatus, an instrument panel image forming method, a vehicle, a server, an instrument panel image forming system, an instrument panel image display apparatus, an instrument panel image display method, an instrument panel image forming program, and a computer-readable storage medium containing an instrument panel image forming program, each of which improves the security against unauthorized operation of a vehicle.

In order to solve the foregoing problems, an instrument panel image forming apparatus according to the present invention (present apparatus) is an instrument panel image forming apparatus for forming an instrument panel image that is displayed on an instrument panel mounted on a machine, including: identification information assignment means that assigns, to image data encoding the instrument panel image, user identification information for identifying a particular user who operates the machine; and image data storage means that stores, in a user-by-user image data storage section, only the image data assigned the user identification information by the identification information assignment means, no instrument panel image being displayed in a case where a user other than the particular user operates the machine.

The present apparatus forms an instrument panel image that is displayed on an instrument panel, such as a liquid crystal display, which is mounted on a machine such as a vehicle. Further, the instrument panel image that is displayed on the instrument panel may contain a plurality of instrument images, such as a speedometer image and a tachometer image, which provide the user with information about the inside and outside of the machine mounted therewith.

Further, examples of the user identification information for identifying the user include information such as the name, password, ID code, PIN number of the user and information indicating the physical characteristics, such as "face", "DNA", "retina", "fingerprints", "voiceprints", and "veins", of the user.

With this configuration of the present apparatus, instrument panel image data assigned user identification information for identifying a user who operates a machine is stored in the user-by-user image data storage section.

This makes it possible to easily determine which user a formed instrument panel image belongs to. This allows a driver A, for example, to surely and easily identify his/her instrument panel image in driving a vehicle. This makes it possible to retrieve, from the user-by-user image data storage section, the driver A's instrument panel image thus identified, display the instrument panel image on the instrument panel.

With this feature, the present apparatus brings about an effect of making it possible to form individual instrument panel images that, in cases where a plurality of users use a particular machine, can be surely and easily displayed for each separate user.

Further, an instrument panel image forming method according to the present invention is an instrument panel image forming method for forming an instrument panel image that is displayed on an instrument panel mounted on a machine, including the steps of: (i) assigning, to image data encoding the instrument panel image, user identification information for identifying a particular user who operates the machine; and (ii) storing, in a user-by-user image data storage section, only the image data assigned the user identification information in the step (i), no instrument panel image being displayed in a case where a user other than the particular user operates the machine.

With this configuration, the instrument panel image forming method brings about the same effect as the aforementioned instrument panel image forming apparatus.

Further, the instrument panel image forming apparatus according to the dependent claim 2 is characterized in that: the instrument panel image forming apparatus is provided outside of the machine; and the image data storage means stores, in the user-by-user image data storage section mounted on the machine, the image data assigned the user identification information by the identification information assignment means.

This makes it possible to store, in the user-by-user image data storage section, individual instrument panel images formed in advance for each separate user outside of the machine (e.g., vehicle). For example, it is possible that, at the time of purchase of a vehicle, instrument panel images that respectively belong to a plurality of drivers who drive the vehicle are formed by a terminal outside of the vehicle, and then stored in a user-by-user image data storage section mounted on the vehicle. Further, in the case of addition of a new driver who drives the vehicle, an instrument panel image for the new driver's use can be added from the terminal outside of the vehicle.

Thus, a process for forming an instrument panel image can be executed outside of the machine. This makes it possible to suppress an electrical load on the machine, and enables a process for efficiently forming an instrument panel image.

A vehicle according to the dependent claim 4 is characterized by being mounted with such an instrument panel image forming apparatus as described above. With this configuration, a vehicle mounted with an instrument panel image forming apparatus capable of forming individual instrument panel images for each separate user can be provided, as set forth in claim 1.

An instrument panel image display apparatus according to the dependent claim 3 is an instrument panel image display apparatus for displaying an instrument panel image on an instrument panel mounted on a machine, including: user-by-user image data acquisition means that, in accordance with user identification information for identifying a user who operates the machine, acquires, from a user-by-user image data storage section in which image data has been stored by such an instrument panel image forming apparatus as set forth in claim 1 or 2, image data assigned the user identification information, the user identification information being outputted from an outside source; and display means that, in accordance with the image data acquired by the user-by-use image data acquisition means, causes the instrument panel to display the instrument panel image.

This makes it possible to surely and easily display individual instrument panel images for each separate user in cases where a plurality of users use a particular machine.

Further, because of the configuration where in accordance with user identification information inputted, image data assigned the user identification information is acquired, it is possible, for example, to prevent the instrument panel from displaying an instrument panel image that does not belong to a driver who drives the vehicle. Specifically, for example, the driver A inputs his/her identification information in driving the vehicle, whereby the driver A's instrument panel assigned his/her identification information is displayed. This makes it possible to prevent a driver B's instrument panel image from being displayed by mistake.

An instrument panel image display method according to the dependent claim 6 is an instrument panel image display method for displaying an instrument panel image on an instrument panel mounted on a machine, including the steps of: (i) in accordance with user identification information for identifying a user who operates the machine, acquiring, from a user-by-user image data storage section in which image data has been stored by the instrument panel image forming method as set forth in claim 5, image data assigned the user identification information, the user identification information being outputted from an outside source; and (ii) in accordance with the image datum acquired in the step (i), causing the instrument panel to display the instrument panel image.

With this configuration, the instrument panel image display method brings the same effect as the aforementioned instrument panel image display apparatus.

The instrument panel image forming apparatus may be realized by a computer. In this case, an instrument panel image forming program for operating a computer as each of the means to realize such an instrument panel image forming apparatus by computer and a computer-readable storage medium containing such an instrument panel image forming program are encompassed in the scope of the present invention.

For a fuller understanding of the nature and advantages of the invention, reference should be made to the ensuing detailed description taken in conjunction with the accompanying drawings.

### Brief Description of Drawings

Fig. 1 is a block diagram illustrating the configuration of an instrument panel image forming apparatus according to one embodiment of the present invention.
Fig. 2 illustrates the details of instrument image data, background image data, and thumbnail data in an image database.
Fig. 3 illustrates examples of types of parameter-regulating table stored in a regulating database.
Fig. 4 illustrates examples of correction values contained in a parameter-regulating table.
Fig. 5 is a flow chart showing the outline of an operation for forming an instrument panel image in the instrument panel image forming apparatus.
Fig. 6 illustrates an example of arrangement of various instrument images within an instrument panel image.
Fig. 7 illustrates an instrument panel displaying a window that prompts a driver to select from among speedometer images.
Fig. 8 illustrates an example where a speedometer image is corrected, (a) of Fig. 8 illustrating an instrument panel image having a pre-correction image placed therein, (b) of Fig. 8 illustrating an instrument panel image having a post-correction image placed therein.
Fig. 9 illustrates examples of ranges of areas that can be occupied by various instrument images that are arranged within an instrument panel image.
Fig. 10 illustrates an example where the respective display states of various instrument images that are arranged within an instrument panel image are changed, (a) of Fig. 10 illustrating an example of an instrument panel image right after a change, (b) of Fig. 10 illustrating ranges of areas where a navigator image and a speedometer image can be arranged within the instrument panel image, (c) of Fig. 10 illustrating an instrument panel image having post-correction navigator and speedometer images arranged therein.

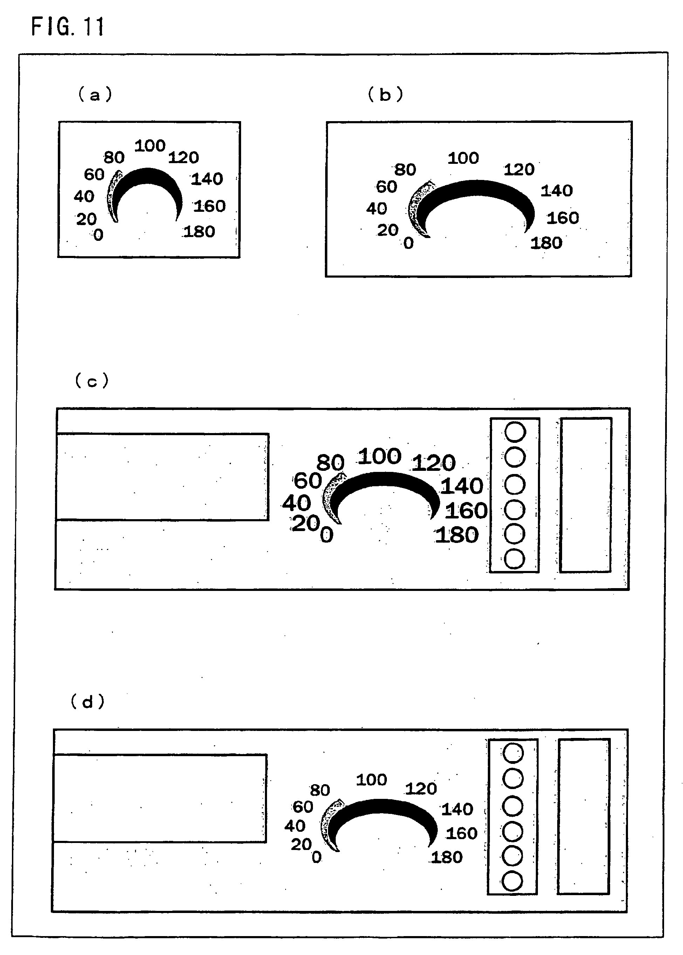

Fig. 11 illustrates an example where the display state of a speedometer image is corrected, (a) of Fig. 11 illustrating a speedometer image whose display state has been neither adjusted nor corrected, (b) of Fig. 11 illustrating a speedometer image whose size has been changed, (c) of Fig. 11 illustrating an instrument panel image having placed therein a speedometer image the size of whose speed scale has been further changed, (d) of Fig. 11 illustrating an instrument panel image having placed therein a speedometer image the size of whose speed scale has been corrected by a parameter correction section.
Fig. 12 illustrates examples of instrument panel images whose instrument images have undergone a process of change, (a) of Fig. 12 illustrating an example of an instrument panel image for a driver A's use, (b) of Fig. 12 illustrating an example of an instrument panel image for a driver B's use.
Fig. 13 is a block diagram illustrating the configuration of a user-by-user instrument panel image display apparatus that is mounted on a vehicle.
Fig. 14 is a flow chart showing the outline of an operation for displaying an instrument panel image according to a driver.
Fig. 15 is a block diagram illustrating the detailed configuration of an instrument panel image forming system including (i) a server having a storage section containing at least either instrument image data or background images and (ii) an instrument panel image forming apparatus that acquires, from the server, at least either instrument or background image data to be changed.

### Reference Signs List

- 1, 50: Instrument panel image forming apparatus
- 2, 52: Instrument panel
- 4, 54: Operation section
- 6, 56: Saving data storage section
- 7, 57: User-by-user image data storage section
- 8: Starting operation section
- 10, 60: Image data changing section (image data changing means)
- 11, 61: Image data change control section (image data storage means)
- 12, 62: User information acquisition section
- 13, 63: Saving data acquisition section
- 14, 83: Thumbnail data acquisition section
- 15, 84: Instrument image data acquisition section
- 16, 65: Parameter correction section (parameter judging means, parameter changing means)
- 17, 64: Parameter adjustment section (parameter changing means)
- 18, 66: Identification information assignment section (identification information assignment means)
- 19, 68: Image display section (display means)
- 21, 90: Image database
- 22, 70: Regulating database
- 30: User-by-user instrument panel image display apparatus
- 40: User-by-user image data display section
- 41: Image data display control section
- 42: User information acquisition section
- 43: User-by-user image data acquisition section (user-by-user image data acquisition means)
- 44: Image display section (display means)
- 67: Communication section (image data acquisition means)
- 80: Server
- 81: Server control section
- 82: Server communication section
- 100: Instrument panel image forming system

### Description of Embodiments

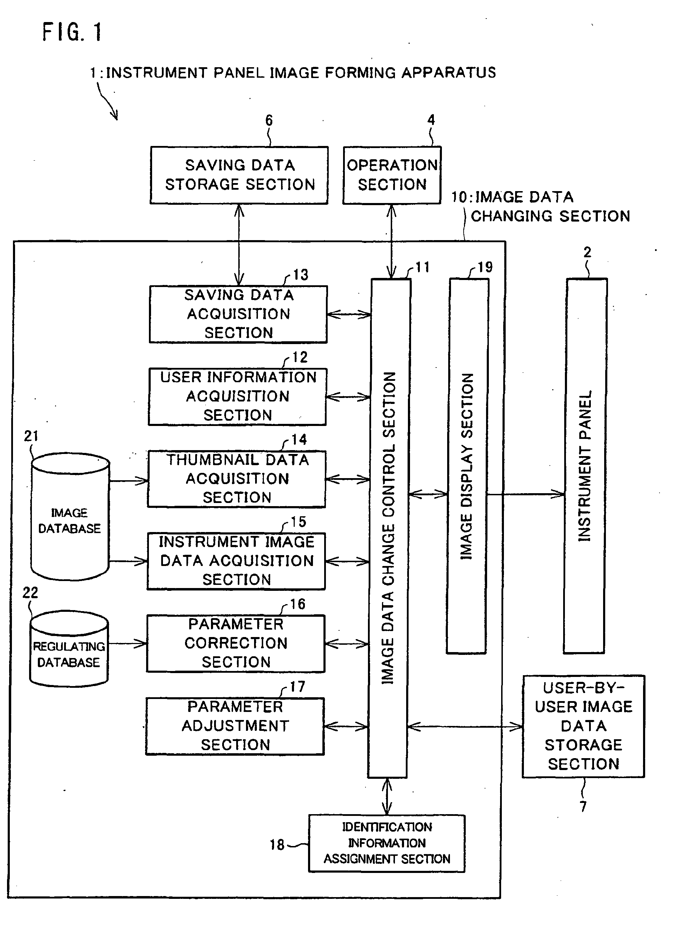

One embodiment of the present invention is described below with reference to Figs. 1 through 15.

Fig. 1 is a block diagram illustrating an instrument panel image forming apparatus 1 according to one embodiment of the present invention. As illustrated in Fig. 1, the instrument panel image forming apparatus 1 is schematically constituted by an instrument panel 2, an operation section 4, a saving data storage section 6, a user-by-user image data storage section 7, and an image data changing section 10.

The instrument panel 2 is a panel display that shows an instrument panel image encoded by instrument panel image data. A good example of the instrument panel 2 is a liquid crystal panel. The instrument panel 2 may be mounted on a vehicle (machine), or may be installed outside of the vehicle as a display for the instrument panel image forming apparatus 1.

It should be noted here that an instrument panel image that is displayed on the instrument panel 2 contains a plurality of "instrument images" that belong to various categories such as a speedometer, a tachometer, an engine temperature gauge, a fuel gauge, various warning lights such as a seat belt warning light, a shift indicator (which indicates the state of a gear), an indicator, navigation which displays a map, a Web window which shows a Web site, a graphic speed display, a numeric speed display, turn signals, and information concerning the surroundings of the vehicle including the vehicle and the condition of the inside of the vehicle, and that provide a driver (user) with various types of information about the inside and outside of the machine mounted therewith. That is, the instrument panel image provides the driver with information vital for or beneficial to driving, entertaining information, or the like. Further, the instrument panel image that is displayed on the instrument panel 2 contains a "background image" that serves as a background against which the instrument images are displayed. In summary, the instrument panel 2 displays an instrument panel image containing instrument images and a background image.

These various instrument images are arranged in specific positions within the instrument panel image, respectively. For example, as will be described later, a speedometer image for showing the traveling speed of the vehicle is placed in the instrument panel image in such a way as to be substantially in the front of the driver or in a position toward the driver. That is, the speedometer image is placed in a position within a range optimally determined in advance to be in the visual field of the driver. In some types of vehicle, an instrument panel may be disposed in the center of a dashboard. Further, the positions in which the instrument images are arranged are determined in advance by categories which the instrument images belong to, but can be changed as will be described later.

It should be noted that the instrument panel image that is displayed on the instrument panel 2 does not need to contain all these types of instrument image. For example, the instrument panel image only needs to contain at least four types out of the instrument images mentioned above. However, in order to secure the safety of the driver, the instrument panel image contains at least instrument images respectively indicating a speedometer, turn signals, a fuel gauge, and an engine temperature gauge.

Further, the instrument panel image data encoding the instrument panel image that is displayed on the instrument panel 2 is composed of plural pieces of instrument image data (image data) respectively encoding these instrument images. Furthermore, the instrument panel image data encoding the instrument panel image does not need to be constituted by all the types of instrument image data mentioned above, either. That is, the instrument panel image data only needs to be composed of data encoding instrument images that are actually displayed on the instrument panel 2.

As will be described later, in the instrument panel image forming apparatus 1, various instrument images contained in an instrument panel image that is displayed can each be changed to another image that belongs to the same category. For example, in the instrument panel image forming apparatus 1, the speedometer can be changed from analog to digital.

This is realized in the instrument panel image forming apparatus 1 by changing instrument image data encoding an instrument image to another piece of instrument image data that belongs to the same category (image data changing step).

Further, the instrument panel image forming apparatus 1 allows the driver to make changes in display state of various instrument images. This is realized in the instrument panel image forming apparatus 1 by changing a parameter defining the display state of an instrument image.

It should be noted that such a parameter is contained in each piece of instrument image data. Further, such a parameter defines at least one of the following: the size and color of an instrument image; the position of the instrument image within an instrument panel image; the size and color of a font contained in the instrument image; the position of the font within the instrument image; and the like.

Therefore, in the instrument panel image forming apparatus 1, for example, by changing a parameter defining the display state of a speedometer image, the size of a numerical value or bar, contained in an analog speedometer, which indicates the traveling speed of a vehicle can be changed, or the color thereof can be changed.

The foregoing is described below in detail.

The operation section 4 is used by the driver to operate the instrument panel image forming apparatus 1. In the instrument panel image forming apparatus 1, a change of at least either an instrument image or a background image, both displayed on the instrument panel 2, to another image, or a change in display state thereof, or the like is made in accordance with various instructions that are inputted through the operation section 4. Information that is inputted through the operation section 4 contains information for identifying the driver (user identification information), specific examples of which include information such as the "name", "password", "ID code", and "PIN number" of the driver and information about the physical characteristics, such as "face", "DNA", "retina", "fingerprints", "voiceprints", and "veins", of the driver. The operation section 4 is an input device such as a mouse, a keyboard, or a touch panel, or is a detection device that detects the physical characteristics of the driver, and instructions may be inputted through an image changing interface that is displayed via an image data change control section 11, an image display section 19, and the instrument panel 2.

The saving data storage section 6 stores therein at least either various types of saving instrument image data indicating instrument images that are displayed on the instrument panel 2 or various types of saving background image data. When starting to operate, the instrument panel image forming apparatus 1 usually uses at least either the saving instrument image data or the various saving background image data, both stored in the saving data storage section 6, to display an instrument panel image on the instrument panel 2 as a standard image. Further, the saving data storage section 6 also stores therein new instrument panel image data formed by the instrument panel image forming apparatus 1.

The user-by-user image data storage section 7 stores therein instrument panel image data, formed for each separate user, which contains various instrument images that are displayed on the instrument panel 2.

### (Configuration of the Image Data Changing Section)

The image data changing section 10 changes at least either an instrument image or a background image, both displayed on the instrument panel 2, to at least either another instrument image or another background image according to the user. Further, the image data changing section 10 also has a function of changing the display state of at least either an instrument image or a background image.

The present instrument panel image forming apparatus 1 has as an object to form individual instrument panel images that, in cases where a plurality of users use a particular vehicle, can be surely and easily displayed for each separate user. Moreover, in order to achieve this object, the present instrument panel image forming apparatus 1 is characterized especially by the image data changing section 10. Therefore, the configuration, action, and effect of the image data changing section 10 are described below in detail. It should be noted that the image data changing section 10 may be mounted on the vehicle or installed in the vehicle's dealer or the like. When installed in the vehicle's dealer or the like, the image data changing section 10 can be realized by being configured to download a formed instrument panel image into a memory device (user-by-user image data storage section) of the vehicle through a network line (described later) and cause the instrument panel 2 to display an instrument panel image according to the user.

As illustrated in Fig. 1, the image data changing section 10 includes an image data change control section (image data storage means) 11, a user information acquisition section 12, a saving data acquisition section 13, a thumbnail data acquisition section 14, an instrument image data acquisition section 15, a parameter correction section 16, a parameter adjustment section 17, an identification information assignment section (identification information assignment means) 18, an image display section (display means) 19, an image database 21, and a regulating database 22.

The user information acquisition section 12 acquires the driver's information inputted through the operation section 4. The information that is inputted through the operation section 4 contains the aforementioned information for identifying the driver.

The image data change control section 11 controls the overall operation of the image data changing section 10. For example, the image data change control section 11 receives an input signal from the operation section 4 and outputs signals and data to various members (described later).

The image data change control section 11 includes a memory (not illustrated). In this memory, at least either various types of instrument image data or various types of background image data both acquired from the saving data storage section 6 through the saving data acquisition section 13 (described later) are temporarily stored.

The saving data acquisition section 13 accesses the saving data storage section 6 to acquire at least either saving instrument image data or background image data as a standard image. Further, the saving data acquisition section 13 also has a function of writing at least either saving instrument image data or saving background image data and newly formed instrument panel image data in the saving data storage section 6.

The thumbnail data acquisition section 14 accesses the image database 21 to acquire thumbnail data selected by the driver. The thumbnail data encodes a thumbnail representing at least either an instrument image or a background image in a small size. Further, as will be described later, thumbnail data is used by the image display section 19 when the instrument panel 2 displays an image that prompts the driver to select at least either an instrument or background image to be changed. Further, thumbnails of the present embodiment also include various pictures (e.g., symbols representing meters, a shift lever, a seat belt warning light) drawn within rectangles.

The instrument image data acquisition section 15 accesses the image database 21 to acquire at least either instrument image data or background image data. As described above, instrument image data is data encoding each instrument image that constitutes an instrument panel image. Further, as described above, background image data is data encoding a background image that constitutes an instrument panel. Background image data may be composed of a combination of plural pieces of data.

The instrument image data acquisition section 15 uses an identifier represented by an identifier signal generated by the image data change control section 11, thereby identifying and acquiring, from the image data base 21, at least either instrument image data encoding an instrument image selected by the driver or background image data encoding a background image selected by the driver. This is described below in detail.

The parameter correction section 16 determines whether or not at least either the display states of various instrument images or the display states of various background images are within preset regulating ranges (plurality of display states). In so doing, the parameter correction section 16 uses a parameter-regulating table, stored in the regulating database 22, for changing at least either an instrument image or a background image. This table is described below in detail.

Further, the parameter correction section 16 uses an identifier represented by an identifier signal generated by the image data change control section 11, thereby identifying and acquiring, from the regulating database 22, a changing parameter value applicable to at least either instrument or background image data to be changed. This is described below in detail, too.

The parameter adjustment section 17 changes, based on a parameter value inputted by the driver through the operation section 4, a parameter value defining the display state of at least either an instrument image or a background image.

The identification information assignment section 18 assigns, to instrument panel image data containing at least either instrument image data or background image data that has been changed by the parameter adjustment section 17, information for identifying the driver, the information being acquired by the user information acquisition section 12. Specifically, the identification information assignment section 18 associates, with a new instrument panel image containing at least either the instrument image data thus changed or the background image data thus changed, an identifier represented by an identifier signal generated by the image data change control section 11.

The image display section 19 causes the instrument panel 2 to display an instrument panel image containing instrument images encoded by instrument image data and a background image encoded by background image data. Further, the image display section 19 also has a function of causing the instrument panel 2 to display thumbnails, encoded by thumbnail data, for showing what instrument images and a background image look like.

The image database 21 is a database in which the aforementioned individual pieces of instrument image data encoding instrument images and the aforementioned individual pieces of background image data encoding background images have each been stored in such a form as to be associated with an identifier and a corresponding thumbnail.

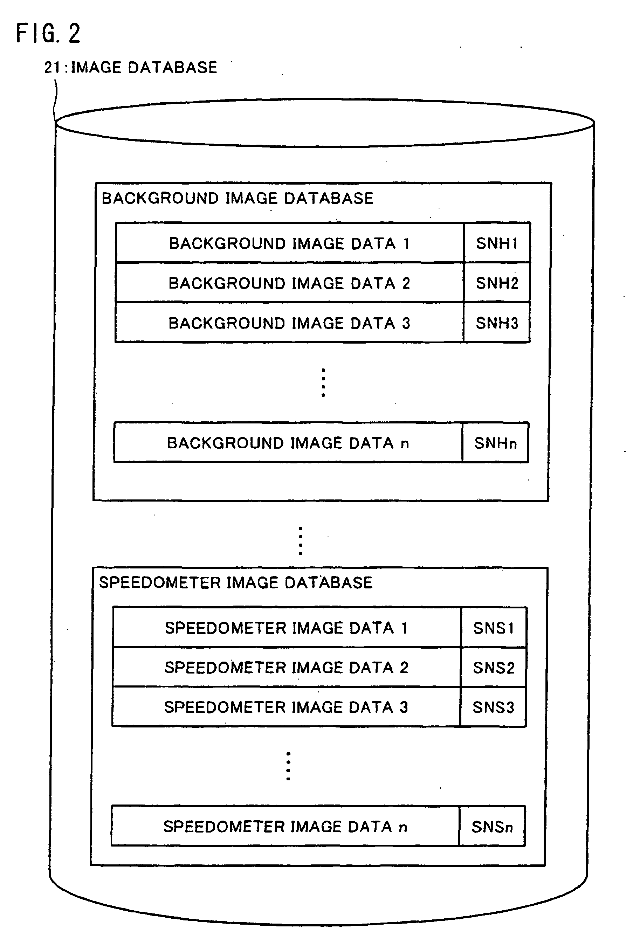

The image database 21 is described below in detail with reference to Fig. 2. Fig. 2 illustrates the details of instrument image data and background image data in the image database 21. As illustrated in Fig. 2, the image database 21 has stored therein sub-databases, such as a background image database and a speedometer image database, each of which contains plural types of instrument image data that belong to the same category. Specifically, for example, the speedometer image database has stored therein plural types of speedometer image, such as an analog speedometer, a digital speedometer, speedometers of different font colors, and speedometers of different sizes, from among which a plurality of drivers can select.

Such databases have individual pieces of instrument image data each stored therein in such a form as to be associated with an identifier and corresponding thumbnail data. For example, as illustrated in Fig. 2, the background image database has background image data 1 to n (where n is a positive integer) stored therein together with thumbnail data SNH1 to SNHn encoding thumbnails of these images. Further, although not particularly illustrated, the background image data stored in the background image database are in association with identifiers corresponding to these pieces image data.

Similarly, the speedometer image database has speedometer data 1 to n stored therein together with thumbnail data SNS1 to SNSn encoding thumbnails of these images. The speedometer image data stored in the speedometer image database are in association with identifiers corresponding to these pieces of image data.

Thus, the thumbnail data acquisition section 14 and the instrument image data acquisition section 15 use the identifiers to identify and acquire, from the image database 21, thumbnail data, instrument image data, and background data that are to be acquired. This is described below in detail.

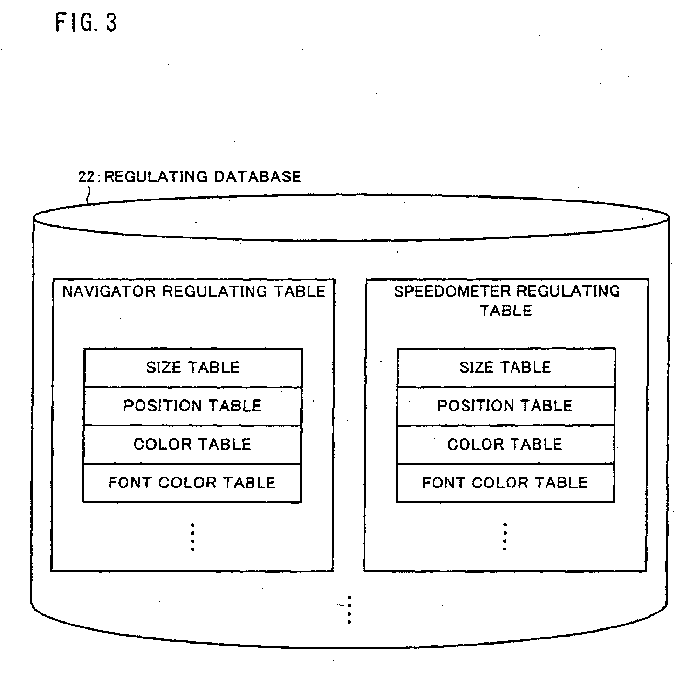

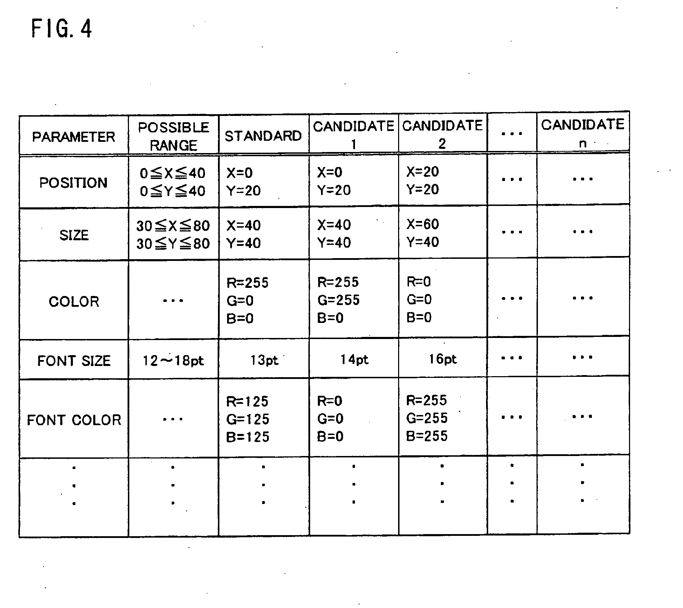

The regulating database 22 is a database that is used for changing a parameter defining the display state of at least either an instrument image or a background image, and that has parameter-regulating tables stored therein. The regulating database 22 is described in detail with reference to Figs. 3 and 4.

Fig. 3 illustrates the details of parameter-regulating tables contained in the regulating database 22. As illustrated in Fig. 3, the regulating database 22 has stored therein various parameter-regulating tables such as a navigator regulating table and a speedometer regulating table. The types of parameter-regulating table are not limited to these, and the regulating database 22 may contain parameter-regulating tables corresponding to other instrument images and other background images that are displayed on the instrument panel 2.

Further, as illustrated in Fig. 3, each parameter-regulating table has stored therein various subtables such as a size table, a position table, a color table, and a font color table. These subtables have stored therein change values that are used for changing various parameters defining the display state of at least either an instrument image or a background image. Therefore, the display state of at least either an instrument image or a background image can be changed within a parameter range indicated in each subtable. Such a parameter range reflects values stipulated by laws, regulations, or the like intended to avoid undermining safety while driving. Therefore, the parameter range can be changed in accordance with a change in stipulated value due to law amendment or the like. A process for setting a parameter range in accordance with the state of a vehicle is carried out by a driver, a distribution source of the vehicle, a public institution, or the like.

These subtables are described with reference to Fig. 4. Fig. 4 illustrates an example of a parameter-regulating table that is contained in the regulating database 22.

As illustrated in Fig. 4, a parameter-regulating table has individual subtables for each separate parameter defining the display state of an instrument image. Examples of parameters include the position, size, and color of an instrument image and the size and color of a font contained in the instrument image. As illustrated in Fig. 4, these subtables each contain a range of values within which the parameter can vary, a normal value of the parameter, and candidates 1 to n for a value that is selected at the time of change in parameter.

A specific example of changing the display state of an instrument image with use of such a regulating database 22 is described later.

### (Example of an Operation for Forming an Instrument Panel Image)

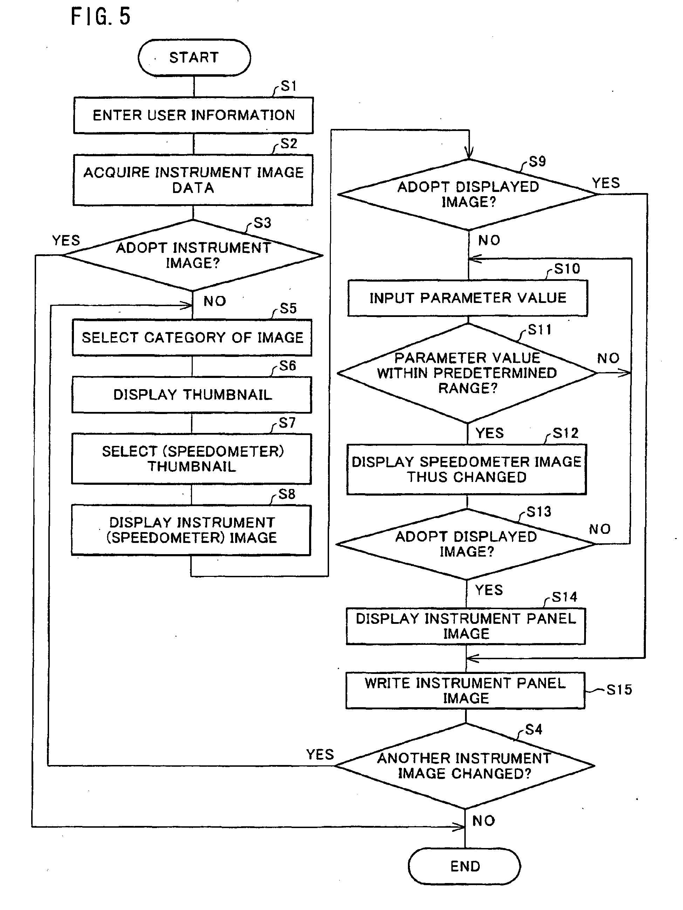

In the following, an operation for forming a new instrument panel image in the instrument panel image forming apparatus 1 by changing an instrument image to another instrument image (display state) according to a driver is described in detail with reference to Fig. 5. Fig. 5 is a flow chart showing the outline of an operation for forming an instrument panel image.

First, during normal operations, the instrument panel 2 displays an "ENTER USER INFORMATION" button. When a driver (herein referred to as "driver A") presses down the button through the operation section 4, the instrument panel 2 displays a window where user information is inputted, e.g., a window where the name of the driver A is inputted. The driver A inputs his/her name through the operation section 4 (S1). The user information acquisition section 12 acquires the driver A's information (name) inputted through the operation section 4. At this point, the instrument panel image forming apparatus 1 shifts to an instrument image change mode. Specifically, in response to input of the name of the driver A, the operation section 4 outputs a saving data acquisition request signal to the image data change control section 11.

In response to input of the saving data acquisition request signal, the image data change control section 11 outputs the signal to the saving data acquisition section 13, with the result that the saving data acquisition section 13 accesses the saving data storage section 6 to acquire instrument panel image data, saved to serves as a standard image, which contains various types of instrument image data (S2). Then, the saving data acquisition section 13 outputs, to the image data change control section 11, the instrument panel image data thus acquired.

In response to input of the instrument panel image data, the image data change control section 11 stores these pieces of data in the memory (not illustrated). Further, the image data change control section 11 causes the instrument panel 2 through the image display section 19 to display "ADOPT" and "CHANGE" buttons, together with the instrument panel image thus inputted, in order to ask the driver A whether he/she adopts the image (S3). When the driver A presses down the "ADOPT" button through the operation section 4 (YES in S3), the process is terminated after the instrument panel image displayed on the instrument panel 2 is decided on.

On the other hand, when the driver A does not adopt but would like to change the instrument panel image displayed on the instrument panel 2 and presses down the "CHANGE" button (NO in S3), the image data change control section 11 outputs an instrument image change mode shift signal to the image display section 19. In response to input of the signal, the image display section 19 switches the instrument panel 2 to displaying a window where the driver A can select a category of instrument image that he/she would like to change. For example, the image display section 19 causes the instrument panel 2 to display a message on an upper portion thereof. An example of the message is "SELECT A CATEGORY OF IMAGE THAT YOU WOULD LIKE TO CHANGE".

Next, the driver A uses the operation section 4 to select, from among the various instrument images constituting the instrument panel image displayed on the instrument panel 2, which category of image he/she is going to change (S5). In this case, for example, the driver A operates the operation section 4 to select one of the instrument images displayed on the instrument panel 2. When the operation section 4 is a mouse, the driver A clicks twice. In the result, the operation section 4 outputs, to the image data change control section 11, a category identification signal representing the category (e.g., speedometer, tachometer) of instrument image to be changed. Let it be assumed here that the driver A has selected the speedometer category.

In response to input of the category identification signal representing the speedometer category, the image data change control section 11 analyzes the signal and identifies a category of instrument (speedometer) image data to be acquired. Based on a result of the identification, the image data change control section 11 generates an identifier signal associated with thumbnail data encoding thumbnails of speedometer images belonging to the category selected by the driver A. Then, the image data change control section 11 outputs, to the thumbnail data acquisition section 14, the identifier signal thus generated.

In response to input of the identifier signal, the thumbnail data acquisition section 14 accesses the image database 21. Then, the thumbnail data acquisition section 14 acquires the thumbnail data from the image database 21 by using an identifier represented by the identifier signal. The thumbnail data acquired at this point encode thumbnails corresponding to a plurality of selectable speedometer images belonging to the category of the speedometer image selected by the driver A to be changed. The thumbnail data acquisition section 14 outputs, to the image data change control section 11, the thumbnails thus acquired.

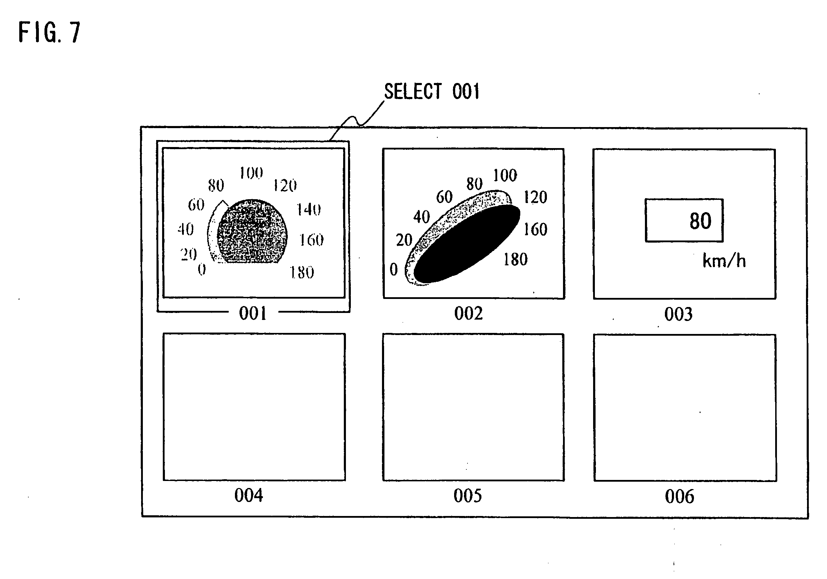

In response to input of the thumbnail data, the image data change control section 11 outputs the image data to the image display section 19. Then, the image display section 19 uses the thumbnails to cause the instrument panel 2 to display a window that prompts the driver A to select a speedometer image to which he/she changes (S6). At this point, the instrument panel 2 displays thumbnails as illustrated in Fig. 7, for example.

After that, the driver A uses the operation section 4 to decide which image he/she selects from among the various speedometer images displayed as thumbnails on the instrument panel 2 (S7). Specifically, for example, the driver A uses the operation section 4 to click twice on one of the thumbnails displayed on the instrument panel 2, whereby the operation section 4 outputs, to the image data change control section 11, an image identification signal representing the type of speedometer to which the driver A changes.

In response to input of the image identification signal, the image data change control section 11 analyzes the signal and identifies the speedometer image to which the driver A changes. Based on a result of the identification, the image data change control section 11 generates an identifier signal associated with speedometer image data encoding the speedometer image selected by the driver A. Then, the image data change control section 11 outputs, to the instrument image data acquisition section 15, the identifier signal thus generated.

In response to input of the identifier signal, the instrument image data acquisition section 15 accesses the image database 21. Then, the instrument image data acquisition section 15 acquires the speedometer image data from the image database 21 by using an identifier represented by the identifier signal. The speedometer image data acquired at this point encodes the speedometer image, selected by the driver A, to which he/she changes. The instrument image data acquisition section 15 outputs, to the image data change control section 11, the speedometer image data thus acquired.

In response to input of the speedometer image data, the image data change control section 11 outputs the data to the image display section 19. Then, the image display section 19 updates the display on the instrument panel 2 by using the speedometer image data thus inputted. Specifically, the image display section 19 replaces, with the speedometer image encoded by the speedometer image data thus inputted, a place where a speedometer image belonging to the category is displayed, so that the replacing speedometer image is displayed (S8; display step).

It should be noted here that the present instrument panel image forming apparatus 1 can adjust the display state of a speedometer image in addition to changing a displayed speedometer image to another image. For example, the instrument panel image forming apparatus 1 can change the size and color of each speedometer image and the position and the like of each speedometer image within an instrument panel image. This is described below.

In S8 above, when the replacing speedometer image is displayed, the driver A uses the operation section 4 to decide whether or not to adopt the displayed speedometer image. Specifically, the image display section 19 causes the instrument panel 2, for example, to display "ADOPT" and "ADJUST" buttons (S9). When the driver A presses down the "ADOPT" button (YES in S9), the displayed speedometer image is decided on, and the process is terminated.

On the other hand, when the driver A presses down the "ADJUST" button (NO in S9), the operation section 4 outputs, to the image data change control section 11, an adjustment image identification signal identifying the speedometer image whose display state is to be changed.

In response to input of the adjustment image identification signal, the image data change control section 11 first identifies, based on the signal, speedometer image data encoding the speedometer image whose parameters are to be adjusted. Then, the image data change control section 11 accesses the memory (not illustrated) to retrieve the speedometer image data whose parameters are to be adjusted. Furthermore, the image data change control section 11 identifies types (e.g., size, color, and position) of various parameters, contained in the speedometer image data thus retrieved, which defines the display state of the speedometer image. Based on a result of the identification, the image data change control section 11 outputs, to the image display section 19, a signal representing the types of parameter thus identified.

In response to input of the signal, the image display section 19 causes the instrument panel 2 to display a window that prompts the driver A to input a parameter value to which the driver A changes. At this point, the driver A uses the operation section 4 to input a parameter value that defines the display state of the displayed speedometer image (S10). For example, the driver A uses the operation section 4 to input the height and width of the speedometer image. Then, in response to the input, the operation section 4 outputs, to the image data change control section 11, the parameter value inputted by the driver A.

In response to input of the parameter value, the image data change control section 11 outputs, to the parameter correction section 16, speedometer image data stored in the memory (not illustrated). The parameter correction section 16 identifies an identifier corresponding to a speedometer image encoded by the speedometer image data.

Next, the parameter correction section 16 accesses the regulating database 22 to identify, based on the identifier thus identified, a parameter-regulating table (speedometer regulating table here) to be used. The parameter correction section 16 determines whether or not the parameter value inputted by the driver A is a value falling within a range, specified in the parameter-regulating table, within which the parameter can vary (S11). This determination allows the instrument panel image forming apparatus 1 to detect, in advance, an instrument panel image containing a speedometer image that is displayed in such a way as to undermine safety while driving (e.g., to impair visibility).

If the parameter value inputted by the driver A does not fall within the stipulated range (NO in S11), the image data change control section 11 causes the instrument panel 2 through the image display section 19 to display an indication that the parameter value inputted is an improper value, e.g., to display "NG", and returns to S10 to prompt the driver A to input another parameter value.

On the other hand, if the parameter value inputted by the driver A falls within the stipulated range (YES in S11), the image data change control section 11 outputs, to the parameter adjustment section 17, the parameter value thus inputted and the speedometer image data whose parameters are to be adjusted. In response to the data and the parameter value, the parameter adjustment section 17 rewrites, with the value thus inputted, the parameter values contained in the speedometer image data. Then, the parameter adjustment section 17 outputs, to the image data change control section 11, the speedometer image data whose parameter values have been rewritten.

In response to input of the data, the image data change control section 11 writes the data in the memory (not illustrated). Furthermore, the image data change control section 11 outputs the data to the image display section 19. Then, the image display section 19 updates the display on the instrument panel 2 by using the speedometer image data whose parameters have been changed, whereby the instrument panel 2 displays the speedometer image whose display state has been changed according to the parameter value inputted by the driver A (S12).

The image display section 19 causes the instrument panel 2 to display, together with a new instrument panel image containing the speedometer image whose state has been adjusted to suit the driver's own preferences, a message asking the driver to confirm whether or not the current display state is OK (S 13). At this point, for example, the instrument panel 2 displays "OK" and "REENTER" buttons.

At this point, when the driver A presses down the "REENTER" button through the operation section 4 (NO in S13), the process returns to S10, where the image display section 19 causes the instrument panel 2 to display a window that prompts the driver A to input a parameter value to which he/she changes. S10 and its subsequent steps are repeated until the driver A presses down the "OK" button.

On the other hand, when the driver A presses down the "OK" button through the operation section 4 (YES in S13), the operation section 4 outputs an image change completion signal to the image data change control section 11. In response to input of the image change completion signal, the image data change control section 11 outputs the signal to the image display section 19. At this point, in response to input of the image change completion signal, the image display section 19 causes the instrument panel 2 to display an instrument panel image for the driver A's use (S14). Meanwhile, the identification information assignment section 18 assigns, to (i) new instrument panel image data, written in the memory of the image data change control section 11, which contains the speedometer image data whose parameter values have been rewritten, (ii) the information, acquired by the user information acquisition section 12, which identifies the driver A. Specifically, an identifier generated by the image data change control section 11 to indicate the name of the driver A is associated with the new instrument panel image data.

Next, the image data change control section 11 writes, in the user-by-user image data storage section 7, the instrument panel image data assigned the identifier indicating the name of the driver A (S15). Further, the image data change control section 11 outputs a saving data update signal to the saving data acquisition section 13, together with the instrument panel image data assigned the identifier indicating the name of the driver A. In response to input of the data and the signal, the saving data acquisition section 13 writes the instrument panel image data in the saving data storage section 6.

After that, having shifted to S4, the image data change control section 11 asks the driver A whether or not there is another instrument image that he/she would like to change. Then, when a "FINISH" button is pressed down (YES in S4), the process is terminated. On the other hand, when a "CONTINUE" button is pressed down (NO in S4), the process returns to S5, where a category of image is selected. The driver A goes on, for example, to carry out an operation for changing the tachometer image.

With this process, an instrument panel image that is displayed on the instrument panel 2 is updated to be a new instrument panel image that is displayed as a combination of a new speedometer image to which the driver A has changed and the other instrument images.

It is preferable, in S4, that the image data change control section 11, which has received the signal indicating that the necessary instrument image has been created ("FINISH"), check the newly formed instrument panel image to confirm that all the instrument images exist. Specifically, the image data change control section 11 confirms that the necessary instrument images surely exist, for example, by asking questions such as "Does a speedometer exit?" and "Do turn signals exist?". This makes it possible to surely prevent formation of an instrument panel image deviating from laws and regulations.

By thus adjusting the display state of an instrument panel image repeatedly for various instrument images contained in the instrument panel image, the respective display states of various instrument images that are displayed on the instrument panel 2 are changed according to values inputted by the driver A. Then, the newly formed instrument panel image serves as an image for a specific driver (driver A).

That is, in the instrument panel image forming apparatus 1, a parameter defining the display state of an image represented by instrument image data is changed to another value (i.e., a value inputted by the driver A), whereby the display state can be changed to suit the driver A's own preferences. With this, in the instrument panel image forming apparatus 1, the instrument panel 2 can display an instrument panel image whose display state has been changed by the driver to suit his/her own preferences within a range of regulations concerning safety. Further, the instrument panel image forming apparatus 1 is configured such that individual instrument panel images formed for each separate driver is assigned identification information about the respective drivers and then saved. Therefore, a publicly-known technique for identifying drivers can be used to surely and easily display individual instrument panel images for each separate driver in cases where a plurality of driver use a particular vehicle. A specific way of displaying individual instrument panel images for to each separate driver is described later.

The aforementioned process is configured such that when in S9 the driver A presses down the "ADJUST" button instead of adopting the speedometer image acquired from the image database 21, the instrument panel 2 displays a window that prompts the driver A to input a parameter value to which the driver A changes. Alternatively, the aforementioned process may be configured, for example, such that when the "ADJUST" button is pressed down, the parameter is changed to one of the parameter values, stored in advance in a parameter-regulating table, at which an optimum display state is attained. A specific example of the configuration is described below.

In this configuration, as illustrated in Fig. 4, a parameter-regulating table contains candidates 1 to n for an optimum value that a parameter is supposed to take on. At this point, the parameter correction section 16 changes the parameters to the values of the first candidate (candidate 1).

The image data change control section 11 outputs, to the parameter adjustment section 17, the parameter values of the candidate 1 and the speedometer image data whose parameters are to be adjusted. In response to the data and the parameter values, the parameter adjustment section 17 rewrites, with the values of the candidate 1, the parameters contained in the speedometer image data. Then, the parameter adjustment section 17 outputs, to the image data change control section 11, the speedometer image data whose parameters have been rewritten.

In response to input the data, the image data change control section 11 writes the data in the memory (not illustrated). Furthermore, the image data change control section 11 outputs the data to the image display section 19. Then, the image display section 19 updates the display on the instrument panel 2 by using the speedometer image data whose parameters have been changed, whereby the instrument panel 2 displays the speedometer image whose display state has been changed according to the values of the candidate 1. In so doing, the image display section 19 causes the instrument panel 2 to display a message asking the driver A to confirm whether or not the current display state is OK. At this point, for example, the instrument panel 2 displays "OK" and "NEXT CANDIDATE" buttons.

At this point, when the driver A presses down the "NEXT CANDIDATE" button through the operation section 4, the operation section 4 outputs a next-candidate selection signal to the image data change control section 11. In response to input of the signal, the image data change control section 11 outputs, to the parameter correction section 16, the next-candidate selection signal and the speedometer image data stored in the memory (not illustrated), whereby the parameter correction section 16 accesses the regulating database 22 to acquire parameter values of the next correction candidate (candidate 2). Then, the parameter correction section 16 changes, to the values of the next candidate, the values of the parameters contained in the speedometer image.

In response to input of the speedometer image data changed based on the parameter values of the candidate 2, the image data change control section 11 stores the speedometer image data temporarily in the memory (not illustrated) as mentioned above. Then, the image data change control section 11 outputs the speedometer image data to the image display section 19.

In response to input of the data, the image display section 19 updates the instrument panel image on the instrument panel 2 by using the speedometer image data whose parameters have been changed to the values of the candidate 2. In so doing, the image display section 19 causes the instrument panel 2 to again display a message asking the driver A to confirm whether or not the current display state is OK. At this point, as mentioned above, the instrument panel 2 displays the "OK" and "NEXT CANDIDATE" buttons.

At this point, when the driver A presses down the "NEXT CANDIDATE" button again, the parameters contained in the speedometer image datum are rewritten to the values of the further next candidate (candidate 3) included in the correction data, through the aforementioned flow of the process. This process can be repeated until the last candidate (candidate n) included in the correction data is used.

On the other hand, when the driver A presses down the "OK" button through the operation section 4, the operation section 4 outputs an image change completion signal to the image data change control section 11. In response to input of the image change completion signal, the image data change control section 11 outputs the signal to the image display section 19. At this point, in response to input of the image change completion signal, the image display section 19 causes the instrument panel 2 to display an instrument panel for the driver A's use. Meanwhile, the identification information assignment section 18 assigns, to (i) new instrument panel image data, written in the memory of the image data change control section 11, which contains the speedometer image data whose parameter values have been rewritten, (ii) the information for identifying the driver A. In this example, an identifier generated by the image data change control section 11 to indicate the name of the driver A is associated with the new instrument panel image data.

Next, the image data change control section 11 writes, in the user-by-user image data storage section 7, the instrument panel image data assigned the identifier indicating the name of the driver A. Further, the image data change control section 11 outputs a saving data update signal to the saving data acquisition section 13, together with the instrument panel image data assigned the identifier indicating the name of the driver A. In response to input the data and the signal, the saving data acquisition section 13 writes the instrument panel image data in the saving data storage section 6.

With this process, an instrument panel image that is displayed on the instrument panel 2 is updated to be a new instrument panel image that is displayed as a combination of a new speedometer image to which the driver A has changed and the other instrument images.

Further, the parameter correction section 16 may be configured such that when it is determined, in S11 of the aforementioned process, that the parameter value inputted by the driver A is out of the range of values, stored in the parameter-regulating table, within which the parameter can vary, the parameter correction section 16 automatically changes the input parameter value to a value falling within the range, stored in the parameter-regulating table, within which the parameter can vary. In particular, it is preferable that the parameter correction section 16 change the input parameter value to a value, falling within the range within which the parameter can vary, which is closest to the input parameter value. For example, in cases where a parameter is 100 and can vary within a value range of 50 to 70, the parameter correction section 16 sets the parameter to 70. This makes it possible to automatically set the display state of an image to a state closest to the display state that the driver A would like, thus making it possible to save the driver A the trouble of reentering a parameter value.

### (Specific Examples of Instrument Images)

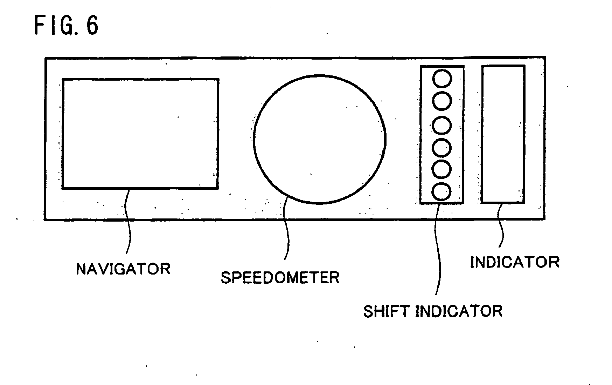

A specific example of a process for changing an instrument image in the aforementioned operation for forming an instrument panel image is described below with reference to Figs. 6 through 11.

Fig. 6 illustrates examples of various instrument images that can be arranged within an instrument panel image. In Fig. 6, an instrument panel image that is displayed on the instrument panel 2 is constituted by a combination of at least either various instrument images respectively indicating a navigator, a speedometer, and a shift indicator or a background image.

At this point, when the driver A chooses through the operation section 4 to change the speedometer image, the instrument panel 2 displays, as illustrated in Fig. 7, thumbnail speedometer images 001 to 006 stored in the image database 21. As illustrated in Fig. 7, the driver A has selected the thumbnail 001.

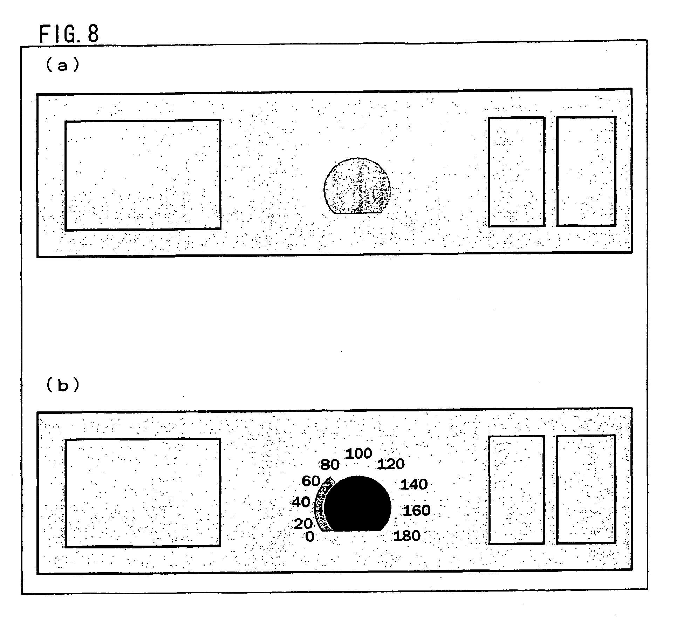

Then, as illustrated in (a) of Fig. 8, the speedometer image selected by the driver A, i.e., the speedometer image corresponding to the thumbnail 001 is displayed in a position within the instrument panel image of Fig. 6 where a speedometer image is disposed. However, in (a) of Fig. 8, the speedometer image selected by the driver A is very similar in coloration to the background image; therefore, the speedometer image is not displayed clearly. Such a display state makes it difficult for the driver A to see the speed of the vehicle while driving. Such a difficulty causes an increase in the risk of an accident.

In view of this, as mentioned above, the instrument panel image forming apparatus 1 uses the function of the parameter correction section 16 to judge a speedometer image displayed as illustrated in (a) of Fig. 8. Specifically, in S8 of the flow diagram of Fig. 5, the parameter correction section 16 makes a comparison between the parameter of coloration of the speedometer image selected by the driver A and the parameter of coloration of the background image. Then, in cases where the values approximate to each other, the image data change control section 11 causes the display panel 2 to display "NG" and prompts the driver A to select another speedometer image with use of a thumbnail. At this point, in cases where the speedometer image thus selected is judged to be "OK", a process for making an adjustment to the speedometer image is carried out as mentioned above, whereby the instrument panel image of (a) of Fig. 8 is corrected to be an image of (b) of Fig. 8. (b) of Fig. 8 illustrates an instrument panel image having a corrected speedometer image placed therein. In (b) of Fig. 8, the speed scale and the bar that shows the current speed of the vehicle are now fairly visible, although they blended in with the background image and therefore were hardly visible before the correction. Thus, the instrument panel image forming apparatus 1 corrects instrument image data so that a speedometer image can be seen by the driver A with clarity.

The instrument panel image forming apparatus 1 may be configured, as mentioned above, to use the function of the parameter correction section 16 to automatically correct a speedometer image displayed as illustrated in (a) of Fig. 8 to be displayed in such a way, as illustrated in (b) of Fig. 8, that the speedometer can be seen by the driver A with clarity.

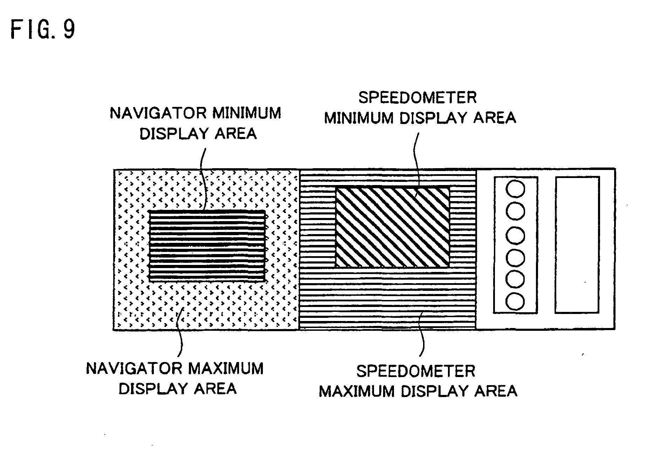

Further, the correction of instrument image data by the parameter correction section 16 is also effective in correction of instrument image data adjusted by the parameter adjustment section 17. This example is described below with reference to Figs. 9 through 11.

Fig. 9 illustrates examples of ranges of areas that can be occupied by various instrument images that are arranged within an instrument panel image. Fig. 9 shows minimum and maximum display areas where a navigator image and a speedometer image are respectively displayed within the instrument panel image. These regions can be calculated from parameter-regulating tables stored in the regulating database 22. That is, these regions can be calculated in accordance with values, contained in the parameter-regulating tables, which represent possible size ranges and possible position ranges.

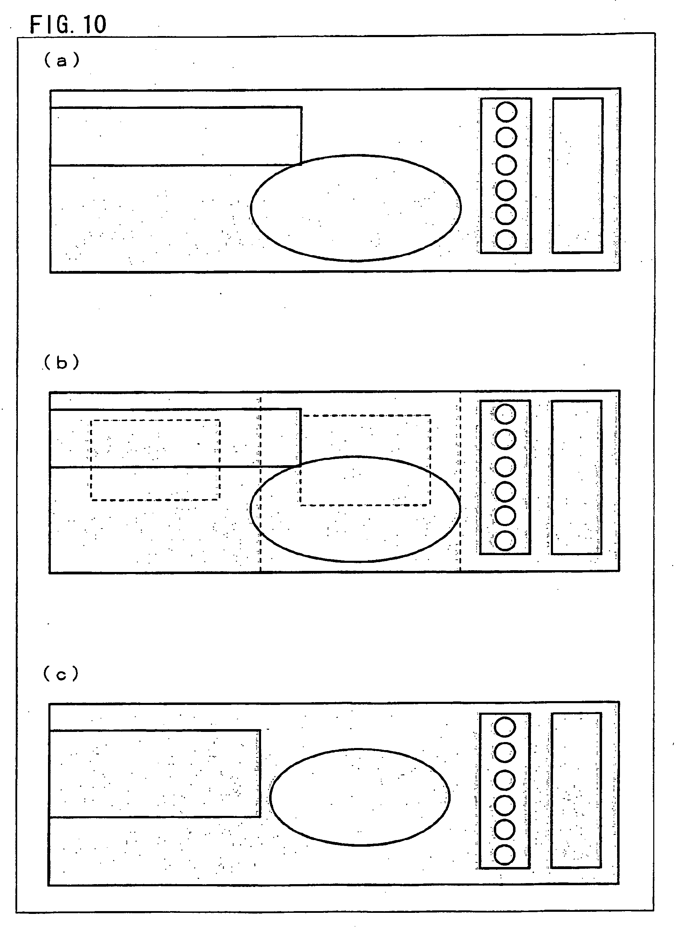

Let it be assumed here that the driver A has changed the sizes and positions of the navigator and speedometer images as illustrated in (a) of Fig. 10 through the operation section 4 and the parameter adjustment section 17. Then, as indicated by the dotted lines in (b) of Fig. 10, the instrument images thus adjusted are both protruding from the respective maximum display areas.

At this point, the parameter correction section 16 determines that the values of the size and position parameters of the navigator and speedometer images are not within the ranges, defined in the parameter-regulating tables, within which the parameters can vary, respectively. Then, the image data change control section 11 causes the instrument panel 2 through the image display section 19 to display an indication that the input parameters are taking on improper values, thereby prompting the driver A to input the parameters again.

Thus, as illustrated in (c) of Fig. 10, the navigator and speedometer images are both adjusted in such a way as to fit into the respective maximum display areas. This makes it possible to prevent the instrument images from being overlapped with each other within the instrument panel image or from being made too small in size for the driver A to see.

Fig. 11 illustrates another example of correction of a speedometer image. (a) of Fig. 11 illustrates a speedometer image selected by the driver A through the operation section 4. The display state of this image has been neither adjusted by the parameter adjustment section 17 nor corrected by the parameter correction section 16. That is, this image is one of the plural pieces of image data stored in the speedometer image database.

When the driver A adjusts the size of this image through the parameter adjustment section 17, the image looks as illustrated in (b) of Fig. 11, for example. It should be noted that in this speedometer image, the display state of the speed scale on the speedometer and the display state of the other sections (e.g., the bar that shows the current speed) can be set independently of each other. Whereas the respective sizes of the bar that shows the current speed and the like, as illustrated in (b) of Fig. 11, have been changed in accordance with a change in size of the whole image, the size of each speed-measuring mark of the speed scale has not been changed. Instead, the position where each speed-measuring mark is placed within the speedometer image has been changed in accordance with the change in size of the whole image.

At this point, when the driver A further increases the size of the speed scale in the image of (b) of Fig. 11 through the operation section 4 and the parameter adjustment section 17 and then places each speed-measuring mark in the instrument panel image, the instrument panel image looks as illustrated in (c) of Fig. 11. As illustrated in (c) of Fig. 11, the speed scale, whose size has been set by the user through the parameter adjustment section 17, is illproportioned in size to the speed bar. Therefore, the speed scale and the speed bar look unbalanced to the driver A. Further, the speed scale is overlapping the shift indicator image, and is therefore hard for the driver A to see. Therefore, in such a case, the driver A is prompted to input the parameter indicative of the size of the speed scale again in accordance with the parameter-regulating table stored in advance in the regulating database 22.

This makes it possible to correct the size of the speed scale of the speedometer image to a display state falling within the range of regulation. An image changed as a result of such correction is illustrated in (d) of Fig. 11. As illustrated in (d) of Fig. 11, the post-correction speedometer image has the speed scale and the speed bar adjusted in size in a balanced manner, and is therefore easy for the driver A to see. Further, the speed scale and the shift indicator image do not overlap each other, and are therefore both easy to see.

It is preferable that on the basis of the display state of a speedometer image placed within an instrument panel image, the instrument panel image forming apparatus 1 correct the speedometer image or another instrument image. That is, in the present instrument panel image forming apparatus 1, the parameter correction section 16 corrects parameters defining the respective display states of various instrument images so that the speedometer image is corrected to be in such a display state as to be seen by a driver with clarity.

For example, a speedometer is an instrument that presents the driver with the speed of a vehicle that he/she is driving, and is one of the most important instruments for the driver to drive the vehicle safely. Therefore, it is most preferable that within an instrument panel image, a speedometer image be placed in a predetermined position within a range optimally determined in advance to be either in a position right in front of the driver or in the visual field of the driver. This allows the driver to confirm the speed of the vehicle with minimum movements of his/her eyes.

For that purpose, it is preferable that the regulating database 22 have stored therein values defining a possible region of placement of this image so that the speedometer image after correction is disposed within the instrument panel image in such as way as to be substantially in the front of the driver. With this, even if the driver places the speedometer image on an edge side of the instrument panel image, the parameter correction section 16 makes a correction so that the speedometer image is placed in a position near the front of the driver. This makes it possible to prevent the speedometer image from being placed within the instrument panel image in such a state that it is hard for the driver to see the speedometer image.

### (Specific Examples of Driver-by-driver Instrument Panel Images)

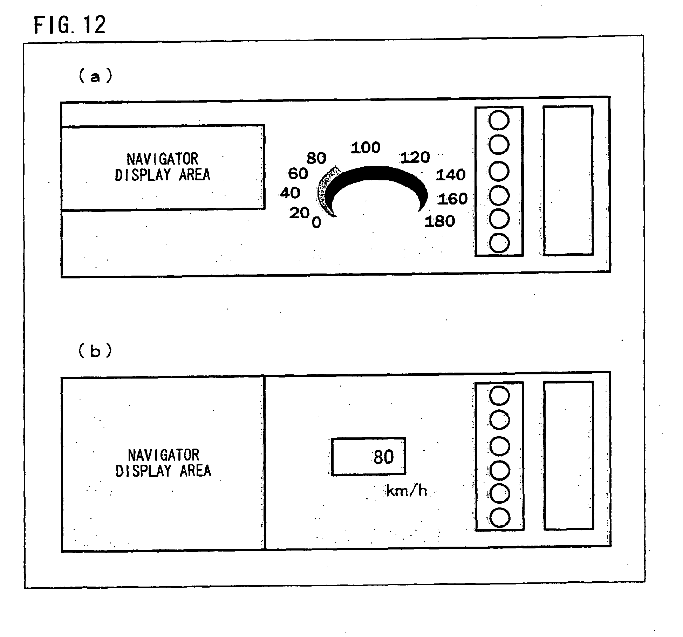

Next, specific examples of user-by-user instrument panel images whose instrument images have undergone the aforementioned process of change are described below with reference to Fig. 12.

Fig. 12 illustrates examples of instrument panel images whose instrument images have undergone a process of change, (a) of Fig. 12 illustrating an example of an instrument panel image for a driver A's use, (b) of Fig. 12 illustrating an example of an instrument panel image for a driver B's use. Let it be assumed here that the driver A is an elderly person having problems with visual field, perspective, eyesight, and the like and the driver B is a healthy young person.

An instrument panel image A ((a) of Fig. 12) formed in accordance with an operation carried out by the driver A has a speedometer image changed so that the size, the characters, and the like are larger, and therefore has better visibility. Thus, the instrument panel image A of (a) of Fig. 12 puts more emphasis on safety than on the driver's taste.

On the other hand, in an instrument panel image B ((b) of Fig. 12) formed in accordance with an operation carried out by the driver B, the speedometer image has been changed to that of a digital speedometer, and is displayed in smaller size. Meanwhile, the navigator display area has been maximized so that it is easy to see various types of information that are displayed. Thus, the instrument panel image B of (b) of Fig. 12 puts emphasis on the driver's taste.

It should be noted here that because the drivers A and B use the same vehicle, the instrument panel image A is displayed in cases where the driver A uses the vehicle and the instrument panel image B is displayed in cases where the driver B uses the vehicle. Thus, in a particular vehicle, individual instrument panel images are displayed for each separate driver.

### (Method for Displaying a Driver-by-driver Instrument Panel Image)

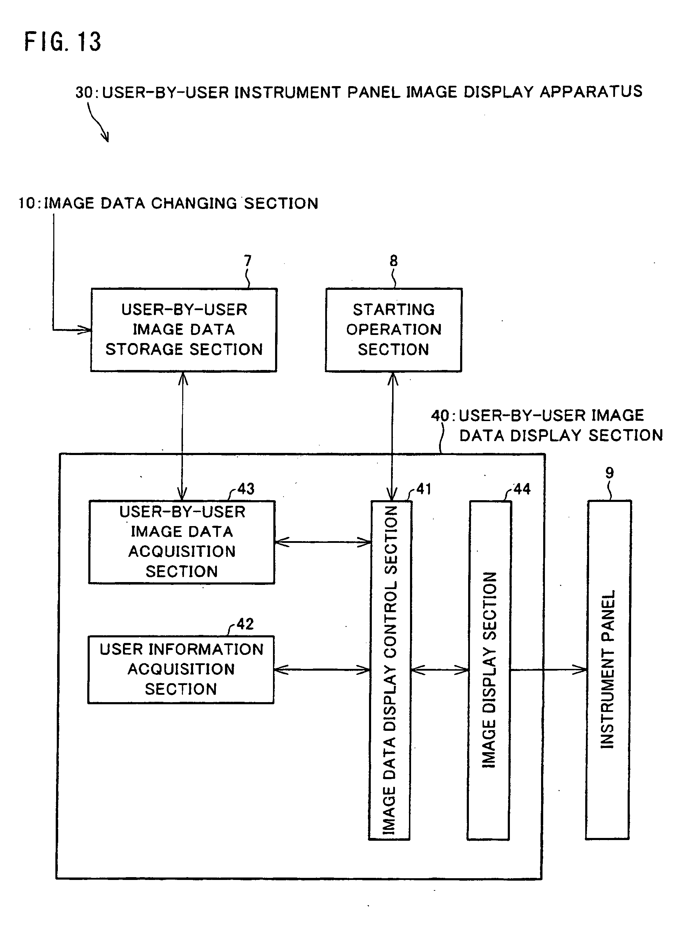

In the following, a method for, in cases where a plurality of users use a particular vehicle, identifying a driver and displaying an instrument panel image for the driver's exclusive use is described below in detail with reference to Fig. 13.

First, a method for identifying a driver can be achieved by using various publicly known techniques, and examples of the method includes a method for identifying a driver by directly inputting the driver's name, password, ID code, PIN number, or the like through an operation section (starting operation section) mounted on a vehicle, a method for identifying a driver with use of an IC card or electronic key having such information embedded therein, and a method for identifying a driver with a part of the driver's body such as his/her face, DNA, retina, fingerprints, voiceprints, or veins.

The following describes an example of configuration where an instrument panel image for the driver A's exclusive use is displayed with use of an electronic key for the driver A' exclusive use which has embedded therein an IC chip having written therein information about the name of the driver A. Fig. 13 is a block diagram illustrating the configuration of a user-by-user instrument panel image display apparatus 30 that is mounted on a vehicle. As illustrated in Fig. 13, the user-by-user instrument panel image display apparatus 30 is schematically constituted by an instrument panel 9, a starting operation section 8, a user-by-user image data storage section 7, and a user-by-user image data display section 40.

The instrument panel 9 is a panel display that shows an instrument panel image encoded by instrument panel image data. A good example of the instrument panel 9 is a liquid crystal panel. An image that is displayed on the instrument panel 9 is the same as that which is displayed on the aforementioned instrument panel 2. It should be noted that: in cases where the instrument panel 2 is configured to be mounted on a vehicle, the instrument panel 9 means the same member as the instrument panel 2; and in cases where the instrument panel 2 is installed outside of a vehicle, the instrument panels 2 and 9 mean members different from each other.

The starting operation section 8 is used by a driver, and accepts the driver's operation in order to identify the driver when the engine is started. Examples of the driver's operation include an operation for starting the engine by inserting an electronic key into the slot, an operation for inputting the driver's PIN number, and an operation for taking a picture of the driver's face.

The user-by-user image data storage section 7 has stored therein instrument panel image data formed by the aforementioned instrument panel image forming apparatus 1 and assigned information (identifiers) for identifying drivers.

The user-by-user image data display section 40 displays individual instrument panel images on the instrument panel for each separate driver. As illustrated in Fig. 13, the user-by-user image data display section 40 includes an image data display control section 41, a user information acquisition section 42, a user-by-user image data acquisition section (user-by-user image data acquisition means) 43, and an image display section (display means) 44.

The user information acquisition section 42 acquires information inputted from a driver through the starting operation section 8. Let it be assumed here that the user information acquisition section 42 acquires information about the name of the driver A from the IC chip embedded in the electronic key.

The image data display control section 41 controls the overall operation of the user-by-user image data display section 40. For example, the image data display control section 41 outputs signals and data to after-mentioned various members in response to signals inputted from the starting operation section 8.

This image data display control section 41 includes a memory (not illustrated). Stored temporarily in this memory are user-by-user instrument panel image data acquired from the user-by-user image data storage section 7 through the user-by-user image data acquisition section 43, which is described later.

The user-by-user image data acquisition section 43 accesses the user-by-user image data storage section 7 to acquire individual instrument panel image data for each separate driver. Specifically, the user-by-user image data acquisition section 43 uses identifiers represented by identifier signals, generated by the image data display control section 41, which identify drivers, to identify and acquire, from among plural pieces of instrument panel image data stored in the user-by-user image data storage section 7 and assigned the identifiers, instrument panel image data corresponding to a driver. Let it be assumed here that the user-by-user image data acquisition section 43 acquires instrument panel image data for the driver A's use.

The image display section 44 causes the instrument panel 9 to display an instrument panel image encoded by the instrument panel image data acquired by the user-by-user data acquisition section 43 according to the driver.

### (Example of an Operation for Displaying a Driver-by-driver Instrument Panel Image)

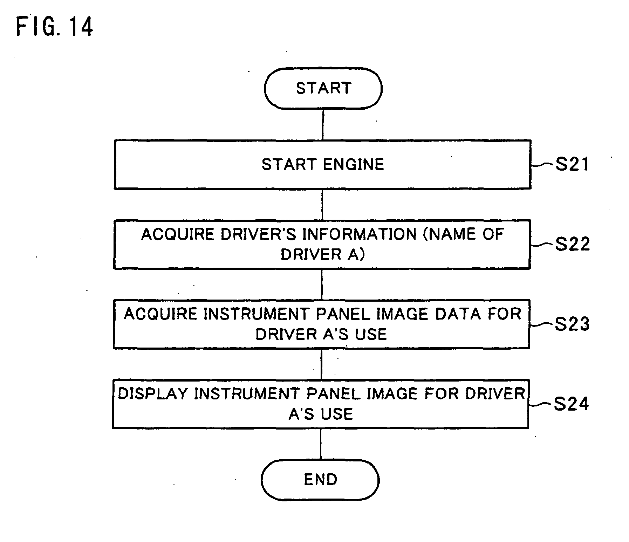

In the following, an operation in the user-by-user instrument panel image display apparatus 30 for displaying an instrument panel image according to a driver is described in detail with reference to Fig. 14. Fig. 14 is a flow chart showing the outline of an operation for displaying an instrument panel image according to a driver.

First, after getting in the vehicle, the driver A inserts an electronic key into the slot (starting operation section 8) and turns the electronic key to start the engine (S21). After the engine is started, the starting operation section 8 outputs a driver identification information request signal to the image data display control section 41.

In response to input of the driver identification information request signal, the image data display control section 41 outputs the signal to the user information acquisition section 42. In the result, the user information acquisition section 42 acquires the driver A's information inputted through the starting operation section 8 (S22). Specifically, the user information acquisition section 42 acquires information about the name of the driver A from an IC chip embedded in the electronic key thus inserted. The user information acquisition section 42 outputs, to the image data display control section 41, the information thus acquired about the name of the driver A.

In response to input of the information about the name of the drive A, the image data display control section 41 generates an identifier signal representing the name of the driver A. Then, the image data display control section 41 outputs, to the user-by-user image data acquisition section 43, the identifier signal thus generated.

In response to input of the identifier signal, the user-by-user image data acquisition section 43 accesses the user-by-user image data storage section 7. Then, the user-by-user image data acquisition section 43 acquires instrument panel image data for the driver A's use from the user-by-user image data storage section 7 by using an identifier represented by the identifier signal (S23). The user-by-user image data acquisition section 43 outputs, to the image data display control section 41, the instrument panel image data thus acquired for the driver A's use.

In response to input of the instrument panel image data for the driver A's use, the image data display control section 41 outputs the data to the image display section 44. Then, the image display section 44 carries out a display on the instrument panel 9 with use of the instrument panel image data thus inputted for the driver A's use (S24).

Thus, since an instrument panel image formed by the instrument panel image forming apparatus 1 and stored in the user-by-user image data storage section 7 contains information for identifying a driver, a publicly known technique for identifying a driver can be used to cause the instrument panel 9 to display a driver-by-driver instrument panel image.

Further, in such a configuration where only an instrument panel image corresponding to a particular driver, i.e., an instrument panel image assigned user identification information is stored in the user-by-user image data storage section 7, no instrument panel image is displayed in cases where a person other than the particular driver tries to drive the vehicle. This makes it difficult to drive the vehicle, thus bringing about an effect of preventing the vehicle from being stolen.

### (Instrument Panel Image Forming System)

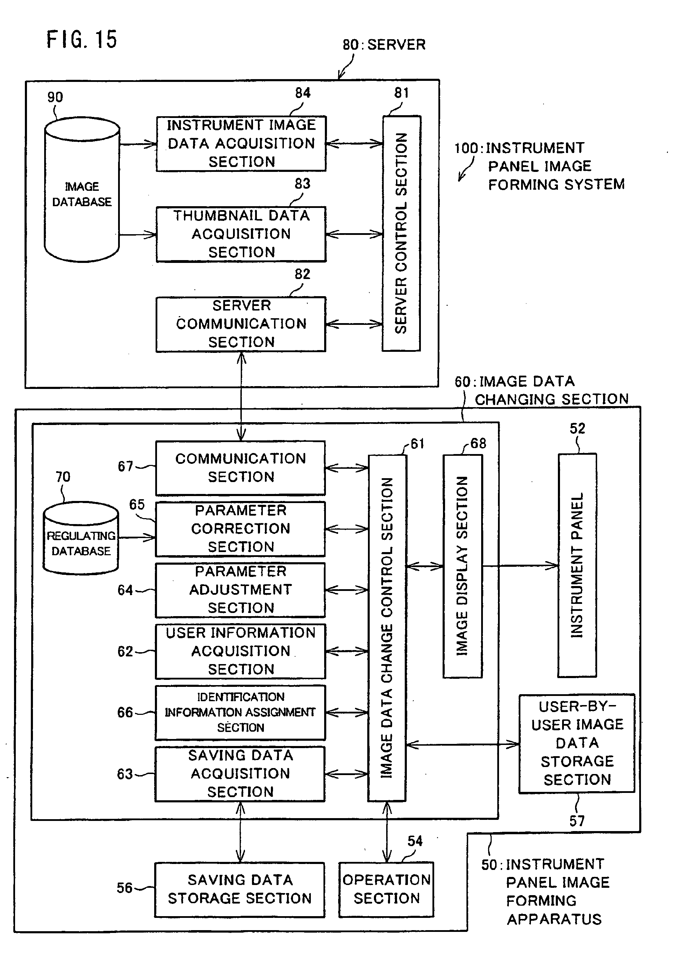

An instrument panel image forming apparatus of the present invention may be configured, as illustrated in Fig. 15, such that instrument image data encoding an instrument image to be changed is acquired through a network line from a server having a storage section having instrument image data stored therein. In this case, the instrument panel image forming apparatus and the server constitute an instrument panel image forming system. The same applies to background image data.

The following describes an instrument panel image forming system 100 illustrated in Fig. 15. Fig. 15 is a block diagram illustrating the detailed configuration of the instrument panel image forming system 100, which includes (i) a server 80 having a storage section having instrument image data stored therein and (ii) an instrument panel image forming apparatus 50 that acquires, from the server 80, instrument image data to be changed. As illustrated in Fig. 15, the present instrument panel image forming system 100 includes the instrument panel image forming apparatus 50 and the server 80.

It should be noted here that, as illustrated in Fig. 15, the instrument panel image forming apparatus 50 includes an instrument panel 52, an operation section 54, a saving data storage section 56, a user-by-user image data storage section 57, and an image data changing section (image data changing means) 60. Among these, the instrument panel 52, the operation section 54, the saving data storage section 56, and the user-by-user image data storage section 57 are identical in configuration to the instrument panel 2, the operation section 4, the saving data storage section 6, and the user-by-user image data storage section 7, and as such, are not described below.

It should be noted that the instrument panel image forming apparatus 50 is characterized by the image data changing section 60. Therefore, the image data changing section 60 is described in detail with reference to Fig. 15.

As illustrated in Fig. 15, the image data changing section 60 includes an image data change control section (image data change control means) 61, a user information acquisition section 62, a saving data acquisition section 63, a parameter adjustment section (parameter changing means) 64, a parameter correction section (parameter changing means, parameter judging means) 65, an identification information assignment section (identification information assignment means) 66, a communication section (image data acquisition means) 67, and an image display section (display means) 68. Among these, the user information acquisition section 62, the saving data acquisition section 63, the parameter adjustment section 64, the parameter correction section 65, the identification information assignment section 66, the image display section 68, and the regulating database 70 are identical in configuration to the user information acquisition section 12, the saving data acquisition section 13, the parameter adjustment section 17, the parameter correction section 16, the identification information assignment section 18, the image display section 19, and the regulating database 22 respectively, and as such, are not described below.

The communication section 67 sends a thumbnail data request signal and an instrument image data request signal to a server communication section 82 provided in the server 80. These signals will be described later. Further, the communication section 67 also has a function of receiving thumbnail data and instrument image data sent from the server communication section 82. That is, in the present instrument panel image forming apparatus 50, the communication section 67 has a function of acquiring thumbnail data and instrument image data from the server 80 through the network line.

The image data change control section 61 has a function of generating a thumbnail data request signal and an instrument image data request signal that are sent by the server communication section 82, in addition to controlling the overall operation of the image data changing section 60. This will be described in detail later.

As illustrated in Fig. 15, the server 80 includes a server control section 81, the sever communication section 82, a thumbnail data acquisition section 83, an instrument image data acquisition section 84, and an image database 90.

The server control section 81 controls the overall operation of the server 80.

The server communication section 82 receives a thumbnail data request signal and an instrument image data request signal that are sent from the communication section 67. Further, the server communication section 82 also has a function of sending thumbnail data and instrument image data to the communication section 67.

The image database 90 is a database in which instrument image data encoding various instrument images such as a speedometer image have been stored in association with identifiers and corresponding thumbnails. In this respect, the image database 90 is identical to the image database 21. However, unlike the image database 21, the image database 90 have stored therein instrument image data corresponding to various types of vehicle and instrument panel image forming apparatus, as well as to a particular instrument panel image forming apparatus.

That is, the image database 90 has instrument image data and thumbnail data stored in such a form as to be associated with vehicle type identifiers representing types of vehicle in which these pieces of data can be used and apparatus identifiers representing types of instrument panel image forming apparatus 50, as well as with identifiers for identifying the respective pieces of data. Therefore, the server 80, which includes the image database 90, can provide, in response to a request from a vehicle or an apparatus, instrument image data requested by various types of instrument panel image forming apparatus 50 mounted on various types of vehicle.

In the following, the instrument panel image forming system 100 is described in detail.

In this system, the instrument panel image forming apparatus 50 is in common with the aforementioned instrument panel image forming apparatus 1 up to the point where the instrument panel 2 shows the driver (driver A) a window that prompts him/her to input a choice of a category of instrument image to be changed. In response to the window thus displayed, the driver A uses the operation section 54 to select a category (e.g., speedometer, tachometer) of instrument image that he/she would like to change. Then, the operation section 4 outputs, to the image data change control section 61, a category identification signal representing the category of instrument image to be changed.

In response to input of the category identification signal, the image data change control section 61 generates a thumbnail data request signal by adding, to the category identification signal, an apparatus identification signal representing the type of instrument panel image forming apparatus 50 and a vehicle identification signal representing the type of vehicle mounted with the instrument panel image forming apparatus 50. Then, the image data change control section 61 outputs the thumbnail data request signal to the communication section 67.

In response to input of the thumbnail data request signal, the communication section 67 sends the signal to the server communication section 82. Then, upon receiving the thumbnail data request signal, the server communication section 82 outputs the signal to the server control section 81.

In response to input of the thumbnail data request signal, the server control section 81 analyzes the signal to identify the category of instrument image data to be acquired, the type of instrument panel image forming apparatus used on the vehicle, and the type of vehicle mounted with the instrument panel image forming apparatus. Then, based on these identified results, the server control section 81 generates a category identifier representing the category, a vehicle type identifier representing the type of vehicle, and an apparatus identifier representing the type of apparatus. After that, the server control section 81 generates an identifier signal representing these identifiers, and then outputs the signal to the instrument image data acquisition section 84.

In response to input of the identifier signal, the instrument image data acquisition section 84 accesses the image database 90 to acquire thumbnail data corresponding to the identifiers represented by the identifier signal. For example, first, the image database 90 determines, in accordance with the category identifier, a sub-database (various instrument image databases such as a speedometer image database. The same applies to the background image database) to be accessed. Next, the image database 90 accesses the sub-database thus determined and, in accordance with the apparatus identifier and the vehicle type identifier, acquires all the thumbnail data stored in the sub-database in such a form as to be associated with both of these identifiers. Then, the instrument image data acquisition section 84 outputs, to the server control section 81, the thumbnail data thus acquired.

In response to input of the thumbnail data, the server control section 81 outputs the thumbnail data to the server communication section 82. Then, in response to input of the thumbnail data, the server communication section 82 sends the thumbnail data to the communication section 67.

Upon receiving the thumbnail data, the communication section 67 outputs the thumbnail data to the image data change control section 61. Then, in response to input the thumbnail data, the image change control section 61 outputs the thumbnail data to the image display section 68, whereby the image display section 68 causes the instrument panel 52 to display thumbnails encoded by the thumbnail data. After that, the driver A can select from among the thumbnails of selectable instrument images on the instrument panel 52 through the operation section 54.

At this point, the driver A uses the operation section 54 to select any one of the thumbnails displayed on the instrument panel 52. Then, the operation section 54 outputs, to the image data change control section 61, an image identification signal representing the instrument image to which the driver A changes.

In response to input of the image identification signal, the image data change control section 61 generates an instrument image data request signal containing the image identification signal, and then outputs the instrument image data request signal to the communication section 67. Then, the communication section 67 sends the instrument image data request signal to the server communication section 82.

Upon receiving the instrument image data request signal, the server communication section 82 outputs the signal to the server control section 81. Then, the server control section 81 analyzes the signal to generate, based on the image identification signal contained in the signal, an identifier signal representing an identifier corresponding to the instrument image data to be acquired. Then, the server control section 81 outputs the image identifier signal to the instrument image data acquisition section 84.

In response to input of the identifier signal, the instrument image data acquisition section 84 accesses the image database 90 to acquire, based on the identifier represented by the identifier signal thus inputted, a piece of instrument image data associated with the identifier. Then, the instrument image data acquisition section 84 outputs, to the server control section 81, the instrument image data thus acquired.

In response to input of the instrument image data, the server control section 81 outputs the instrument image data to the server communication section 82. Then, in response to input of the instrument image data, the server communication section 82 sends the instrument image data to the communication section 67.

Upon receiving the instrument image data, the communication section 67 outputs the instrument image data to the image data change control section 61. Then, in response to input of the instrument image data, the image data change control section 61 writes the instrument image data in the memory (not illustrated) and outputs the instrument image data to the image display section 68.

With use of the instrument image data inputted thereto, the image display section 68 updates the instrument image on the instrument panel 52. Specifically, the image display section 68 replaces the previously displayed instrument image with the instrument image encoded by the instrument image data inputted thereto, and causes the instrument panel 52 to display the latter instrument image. Therefore, the newer instrument image selected by the driver A replaces the older instrument image to be displayed on the instrument panel 52. After that, as in the case of the instrument panel image forming apparatus 1, the driver A selects a category of image to which he/she would like to change, and a process by which the image thus selected is changed to suit the driver A's own preferences within a range defined in advance is executed.

On completion of the image changing process, the image display section 19 causes the instrument panel 2 to display an instrument panel image for the driver A' use. Meanwhile, the identification information assignment section 66 assigns, to the new instrument panel image data, information for identifying the driver A. In this example, an identifier generated by the image data change control section 61 to indicate the name of the driver A is associated with the new instrument image data. Next, the image change control section 61 writes, in the user-by-user image data storage section 57, the instrument panel image data assigned the identifier indicating the name of the driver A.

The aforementioned instrument panel image forming system 100 is merely an example, and may be a system of another configuration. For example, such a system can also be configured that the server 80 includes the regulating database 70.

In this case, a correction data acquisition section (not illustrated) is provided in the server 80 for acquiring correction data from the regulating database 70 contained in the server 80. Moreover, in the server 80, the correction data acquisition section acquires correction data from the regulating database 70 in accordance with a correction data request signal sent from the communication section 67. Then, the server 80 sends the data to the instrument panel image forming apparatus 50 through the server communication section 82. Thus, in the instrument panel image forming apparatus 50, the parameter correction section 65 corrects, with use of the parameter correction data acquired from the server 80, parameters contained in the instrument image data.

Further, such a system can also be configured that the server 80 also includes the parameter correction section 65. In this case, a parameter value defining the display state of an instrument image and an identifier signal identifying the type of instrument image whose display state is defined by the parameter are sent to the server 80. Then, on the side of the server 80, parameter correction data is acquired from the regulating database 70 with use of an identifier represented by the identifier signal, and the parameter value thus received is corrected. Then, the parameter value thus changed is sent to the instrument panel image forming apparatus 50.

Upon receiving the parameter value, the instrument panel image forming apparatus 50, e.g., the parameter adjustment section 64 uses the parameter value to change a parameter value to be corrected. Such a configuration also makes it possible to correct a parameter defining the display state of an instrument image.

Furthermore, such a system is also possible in which pre-correction instrument image data to be corrected is sent to the server 80 instead of a parameter value. In this system, a parameter is corrected in the server 80. Moreover, the server communication section 82 sends, to the instrument panel image forming apparatus 50, instrument image data whose parameter has been corrected. The instrument panel image forming apparatus 50 stores, in the memory (user-by-user image data storage section), instrument panel image data containing post-correction instrument image data thus received, and displays an instrument image according to a driver.

Thus, in the instrument panel image forming system 100, the instrument panel image forming apparatus 50 acquires instrument image data from the server 80. For this reason, even in cases where instrument image data encoding a selectable instrument image is newly provided, the data can be easily acquired. That is, even when data is updated on the server side or novel data is added, the new data can be made available promptly.

Further, in the instrument panel image forming apparatus 100, a range within which a parameter stored in a parameter-regulating table contained in the regulating database can vary can be updated as needed through the communication section. This makes it possible to form an instrument panel image in accordance with a change in stipulated value due to law amendment or the like.

It should be noted here that the aforementioned instrument panel image forming apparatus 1 and instrument panel image forming system 100 are merely modes for carrying out the present invention. That is, as will be described below, the present invention can be applied in many variations within the scope of the claims.

For example, the data format of the aforementioned instrument image data may be any data format that encodes an image. That is, the data format of instrument image data and background image data may be a format such as: BMP (Bitmap) in which an image is stored in units of dots; a compressed data format such as TIFF (Tagged Image File Format), JPEG (Joint Progressive Experts Group), or PNG (Portable Network Graphics); or a vector data format such as EPS (Encapsulated PostScript) or PDF (Portable Document Format).

In cases where the data format of instrument image data and background image data is Bitmap, plural pieces of bitmap data representing instrument images and background images of different various sizes are prepared, and these images are changed to fit a size set by a driver, whereby the display state can be changed without deterioration in resolution of the images. Meanwhile, it is also possible to display instrument images and background images of various sizes by changing a single piece of bitmap data.

Further, the instrument image data and background image data may be data encoding a single still image, or may be data encoding a moving image composed of a plurality of still images. Alternatively, the instrument image data and background image data may be an image data group composed of plural pieces of instrument image data and background image data each encoding a single still image. For example, the state of a speedometer image displayed on the instrument panel is changed over time in accordance with changes in traveling speed of the vehicle. Therefore, instrument image data encoding the speedometer image may be an image data group composed of plural pieces of image data encoding still images representing the respective states of the traveling speed.

The aforementioned image databases 21 and 90 may be of any format as long as they are databases in which instrument image data, background image data, and thumbnail data can be stored. For example, instrument image data may be configured to be in an XML (Extensible Markup Language) and linked to background image data. This makes it possible that once a speedometer image is downloaded, a background image for use with a speedometer is downloaded simultaneously. Further, the regulating database 22 and 70 may be of any format as long they are databases in which correction parameter values and identifiers identifying the types of parameter to be corrected are stored in association with each other. That is, these databases can be hash databases or relational databases in which identifiers and data are stored in association with each other.

Further, the regulating databases 22 and 70 both have parameter-regulating tables stored therein for respective categories to which various types of instrument image data and background image data belong to. This makes it possible to reduce the size of these databases. However, these databases may have data-by-data parameter-regulating tables stored therein to correspond to every one of the various types of instrument image data and background image. In this case, as compared to the format in which the category-by-category parameter-regulating tables are stored, the display state of at least either an instrument image or a background image can be corrected more finely.

Further, these databases only need to be stored in a given nonvolatile storage medium (memory). It does not matter whether or not such a storage medium is detachable. Furthermore, it does not matter whether or not the storage medium is rewritable (writable), nor does it matter what recording method the storage medium employs and what shape the storage medium takes. Examples of such a storage medium include tapes, such as magnetic tapes and cassette tapes; magnetic disks, such as floppy (registered trademark) disks and hard disks; and other discs, such as CD-ROMs, magneto-optical discs (MOs), mini discs (MDs), and digital video discs (DVDs). In addition, the storage medium may be a card, such as an IC card or an optical card; or a semiconductor memory, such as a mask ROM, an EPROM, an EEPROM, or a flash ROM.

Further, in the regulating databases 22 and 70, the types of subtable that are stored in a parameter-regulating table are not limited to those subtables illustrated in Fig. 4. That is, in the regulating databases 22 and 70, a parameter-regulating table may contain subtables for correcting other parameters. For example, a parameter-regulating table may contain a subtable having stored therein correction values concerning the luminance or contrast of an instrument image, an allowable distance between one instrument image and another, or an allowable distance between one character and another in an instrument image.

Further, in changing candidate values for the parameters to values of the next candidate, the parameter correction section 16 and the parameter correction section 65 may change, to values of the next candidate, only some of the parameters that have been designated by a driver, for example, instead of changing, to values of the next candidate, all the parameters corresponding to all the instrument images. Furthermore, immediately after the parameter correction section 16 and the parameter correction section 65 change the parameters, the parameter correction section 16 and the parameter correction section 65 may automatically correct the parameters without waiting for correction instructions from the driver through the operation section 4.

Further, in the instrument panel image forming apparatus 1, the instrument panel (display panel) 2 is a display panel for displaying image data. This instrument panel 2 is horizontally long with an aspect ratio of not less than 7:3, which indicates the ratio of width to height in display region. This improves the visibility of a simultaneous display of an additional image such as a navigation image and a vehicle state image indicating the state of a vehicle such speed and fuel. Further, the aspect ratio can be 8:3, 30:9, 32:9, or the like. For this reason, the instrument panel 2 can be prepared by combining two panels each having an aspect ratio of 4:3, 15:9, or 16:9. The instrument panel 2 of the present embodiment is, but is not limited to, a wide-sized liquid crystal display panel. For example, the instrument panel 2 may take the form of an organic or inorganic EL (electroluminescence) panel, a plasma display panel, a CRT (cathode ray tube), or the like. The same applies to the instrument panel 52.

Further, the operation section 4 and the operation section 54 can employ an input method such as a touch panel, a hard key, a mouse, or a joystick. Here, in cases where the operation section 4 and the operation section 54 are realized by touch panels, the operation section 4 and the operation section 54 can be integrated into the instrument panel 2 and the instrument panel 52, respectively.

Further, a driver can correct the display state of an instrument image by directly changing the display state of the image on the screen and then changing the parameter values to values corresponding to the display state, as well as by directly inputting numerical values for the parameters. For example, the size of an image can be changed by a method for inputting the width (X) and height (Y) of an image separately, a method for input through operation of a slide bar, or a method for changing the size of an image on a screen by drag-and-drop. Alternatively, the size of an instrument image may be changed by displaying a "SCALE UP" button and a "SCALE DOWN" button on the screen and letting the driver press either of these buttons through the operation section 4.

Further, the parameters defining the display state of an instrument image and background image data may be collectively saved in a file different from a file of instrument image data and background image data. Furthermore, it is preferable that the parameters define at least the size and coloration of an instrument image and a background image. This makes it possible to change at least the size and coloration of an instrument image and a background image.

Further, in changing at least either an instrument image or a background image, the present invention may use a template file in which parameters defining the display state have been stored in advance by category of at least either the instrument image or the background image. In this case, the display state of at least either an instrument image or a background image selected by the driver is changed immediately after the selection on the basis of the parameter values recorded in the template file. This makes it possible to quickly complete the selection of at least either the instrument image or the background image.

Further, the instrument panel image forming apparatus 1 is mounted on a vehicle. The term "vehicle" in the present specification encompasses general means of land transportation, such as automobiles, two-wheeled motor vehicles, and bicycles, which require driver's steering for movement. Further, the instrument panel image forming apparatus 1 can be applied to any means of transportation, such as helicopters, aircrafts, and ships, which require operator's maneuvering for movement, as well as to vehicles. Further, the instrument panel image forming apparatus 1 can be widely applied to general machines including operation panels, as well as to means of transportation.

Furthermore, the image data change control section 10 of the instrument panel image forming apparatus 1 and the image data change control section 60 of the instrument panel image forming apparatus 50 may be stored in a terminal of a shop that sells means of transportation such as vehicle. In this case, various instrument panel images formed by operating the terminal are sent to means of transportation through a network line, and then stored in a memory (user-by-user image data storage section 7) mounted on the means of transportation. Then, the aforementioned user-by-user instrument panel image display apparatus 30 is operated so that the instrument panel 2 displays an instrument panel image according to each driver. This makes it possible, for example, that at the time of purchase of a family car, instrument panel images are formed for all family members by operating a terminal installed at a dealer, and then downloaded into a memory (user-by-user image data storage section 7) inside of the vehicle. Moreover, the instrument panel images thus formed are associated with each separate electronic key. This makes it possible that every time a new driver replaces his/her predecessor, an instrument panel image for the new driver is displayed. Further, in the case of addition of a new driver who drives the vehicle, an instrument panel image for the new driver can be added from the terminal outside of the vehicle through a network line.

Further, the communication section 67 and the server communication section 82 communicate with each other according to any communication method as long as the communication method is a wireless transfer method. Examples of such a wireless transfer method include infrared radiation (IrDA, remote control), Bluetooth (registered trademark), 802.11 wireless, HDR, mobile telephone network, satellite line, or terrestrial digital network. Furthermore, in these communications, data and signals may be transmitted and received in compressed forms.

Each of the members thus described is a functional block. Therefore, these members are realized by computing means such as a CPU executing an instrument panel image display program stored in a memory section (not illustrated) and controlling a peripheral circuit (not illustrated) such as an input-output circuit.

Therefore, the objective of the present invention can also be achieved by mounting to the instrument panel image forming apparatus a computer-readable storage medium containing control program code (executable program, intermediate code program, or source program) for the instrument panel image display program, which is software realizing the aforementioned functions, in order for the computer (or CPU, MPU, DSP) to retrieve and execute the program code contained in the storage medium.

In this case, the program code retrieved from the storage medium realizes the aforementioned functions, and storage medium containing the program code constitutes the present invention. Specifically, the image data changing section 10 of the instrument panel image forming apparatus 1 and the image data changing section 60 of the instrument panel image forming apparatus 50 are each realized by computing means such as a microprocessor executing a predetermined program stored in a memory (not illustrated) of the instrument panel image forming apparatus.

Meanwhile, the aforementioned members may each by realized as hardware that executes the same process as the aforementioned software. In this case, the objective of the present invention is achieved by the instrument panel image forming apparatus, which is hardware.

Further, the computing means may be constituted by single computing mean. Alternatively, the computing means may be constituted by a plurality of computing means, connected through buses inside of the apparatus or various communication paths, which cooperate to execute the program code.

It should be noted here that the program code that can be executed directly by the computing means or the program, serving as data, whose program code can be generated by a process such as decompression to be described later is executed by the computing mean storing the program or data in a storage medium and distributing the storage medium or transmitting the program over a communication network for transmission through a wired or wireless communication path.

The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium (communication path) which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth, 802.11 wireless, HDR, mobile telephone network, satellite line, or terrestrial digital network.

Here, the storage medium for the distribution of a program is preferable removable. After the distribution of the program, the storage medium may or may not be removable. In addition, the storage medium may or may not be rewritable (writable) or volatile, be recordable by any method, and come in any shape at all, provided that the medium can hold the instrument panel image display program.

Examples of such a storage medium include tapes, such as magnetic tapes and cassette tapes; magnetic disks, such as floppy (registered trademark) disks and hard disks; and other discs, such as CD-ROMs, magneto-optical discs (MOs), mini discs (MDs), and digital video discs (DVDs). In addition, the storage medium may be a card, such as an IC card or an optical card; a semiconductor memory, such as a mask ROM, an EPROM, an EEPROM, or a flash ROM; or a memory provided inside a CPU or other computing means.

It should be noted that a program for retrieving the program code from the storage medium and storing it in a main memory and a program for downloading the program code from the communication network are stored in advance in the apparatus in such a way as to be able to be executed by a computer.

The program code may be such that it instructs the computing means regarding all the procedures of the processes. If there is already a basic computer program (for example, an operating system or library) which can be retrieved by a predetermined procedure to execute all or some of the processes, code or a pointer which instructs the computing means to retrieve that basic computer program can replace all or some of the processes.

In addition, the instrument panel image display program storage format of the storage medium may be, for example, such that: the computing means can access the program for an execution as in an actual memory having loaded the program; the program is not loaded into an actual memory, but installed in a local storage medium (for example, an actual memory or hard disk) always accessible to the computing means; or the program is stored before installing in a local storage medium from a network or a mobile storage medium.

In addition, the instrument panel image display program is not limited to compiled object code. The program may be stored as source code or intermediate code generated in the course of interpretation or compilation.

In any case, similar effects are obtained regardless of the format in which the storage medium stores the instrument panel image display program, provided that decompression of compressed information, decoding of encoded information, interpretation, compilation, links, or loading to an memory or combinations of these processes can convert into a format executable by the computing means.

The present invention is not limited to the description of the embodiments above, but may be altered by a skilled person within the scope of the claims. An embodiment based on a proper combination of technical means disclosed in different embodiments is encompassed in the technical scope of the present invention.

As described above, an instrument panel image forming apparatus of the present invention is configured to include: identification information assignment means that assigns, to image data encoding the instrument panel image, user identification information for identifying a user who operates the machine; and image data storage means that stores, in a user-by-user image data storage section, the image data assigned the user identification information by the identification information assignment means.

This brings about an effect of making it possible to form individual instrument panel images that, in cases where a plurality of users use a particular machine, can be surely and easily displayed for each separate user.

The embodiments and concrete examples of implementation discussed in the foregoing detailed explanation serve solely to illustrate the technical details of the present invention, which should not be narrowly interpreted within the limits of such embodiments and concrete examples.

### Industrial Applicability

The present invention can be applied to an image forming apparatus for forming a display screen design that is mounted on means of transportation such as an automobile including an instrument panel or a general machine such as a control machine including an operation panel.

## Claims

1. An instrument panel image forming apparatus for forming an instrument panel image that is displayed on an instrument panel mounted on a machine, comprising:
identification information assignment means that assigns, to image data encoding the instrument panel image, user identification information for identifying a particular user who operates the machine; and **characterised by** in that it further comprises
image data storage means that stores, in a user-by-user image data storage section, only the image data assigned the user identification information by the identification information assignment means, and in that
no instrument panel image being displayed in a case where a user other than the particular user operates the machine.

2. The instrument panel image forming apparatus as set forth in claim 1, wherein:
the instrument panel image forming apparatus is provided outside of the machine; and
the image data storage means stores, in the user-by-user image data storage section mounted on the machine, the image data assigned the user identification information by the identification information assignment means.

3. An instrument panel image display apparatus for displaying an instrument panel image on an instrument panel mounted on a machine, comprising:
user-by-user image data acquisition means that, in accordance with user identification information for identifying a user who operates the machine, acquires, from a user-by-user image data storage section in which image data has been stored by an instrument panel image forming apparatus as set forth in claim 1 or 2, image data assigned the user identification information, the user identification information being outputted from an outside source; and
display means that, in accordance with the image data acquired by the user-by-use image data acquisition means, causes the instrument panel to display the instrument panel image.

4. A vehicle mounted with an instrument panel image forming apparatus as set forth in claim 1.

5. An instrument panel image forming method for forming an instrument panel image that is displayed on an instrument panel mounted on a machine, comprising the steps of:
i assigning, to image data encoding the instrument panel image, user identification information for identifying a particular user who operates the machine; and **characterised in that** this method comprises the following further steps:
ii storing, in a user-by-user image data storage section, only the image data assigned the user identification information in the step i
no instrument panel image being displayed in a case where a user other than the particular user operates the machine.

6. An instrument panel image display method for displaying an instrument panel image on an instrument panel mounted on a machine, comprising the steps of:
i in accordance with user identification information for identifying a user who operates the machine, acquiring, from a user-by-user image data storage section in which image data has been stored by an instrument panel image forming method as set forth in claim 5, image data assigned the user identification information, the user identification information being outputted from an outside source; and
ii in accordance with the image data acquired in the step i, causing the instrument panel to display the instrument panel image.

7. An instrument panel image forming program for operating an instrument panel image forming apparatus as set forth in claim 1 or 2, said instrument panel image forming program causing a computer to function as each of the means.

8. A computer-readable storage medium containing an instrument panel image forming program as set forth in claim 7.

## Patentansprüche

1. Instrumententafelbilderzeugungsvorrichtung zum Erzeugen eines Instrumententafelbildes, das an einer an einer Maschine montierten Instrumententafel angezeigt wird, umfassend:
ein Identifikationsinformationszuweisungsmittel, das Anwenderidentifikationsinformation zum Identifizieren eines bestimmten Anwenders, der die Maschine bedient, das Instrumententafelbild codierenden Bilddaten zuweist;
**dadurch gekennzeichnet, dass** sie des Weiteren umfasst:
ein Bilddatenspeichermittel, das in einem anwenderspezifischen Bilddatenspeicherabschnitt nur die Bilddaten speichert, denen die Anwenderidentifikationsinformation durch das Identifikationsinformationszuweisungsmittel zugewiesen ist,
wobei kein Instrumententafelbild in einem Fall angezeigt wird, in dem ein Anwender, der nicht der bestimmte Anwender ist, die Maschine bedient.

2. Instrumententafelbilderzeugungsvorrichtung nach Anspruch 1, wobei:
die Instrumententafelbilderzeugungsvorrichtung außerhalb der Maschine vorgesehen ist; und
das Bilddatenspeichermittel in dem an der Maschine montierten anwenderspezifischen Bilddatenspeicherabschnitt die Bilddaten, denen die Anwenderidentifikationsinformation durch das Identifikationsinformationszuweisungsmittel zugewiesen ist, speichert.

3. Instrumententafelbildanzeigevorrichtung zum Anzeigen eines Instrumententafelbildes an einer an einer Maschine montierten Instrumententafel, umfassend:
ein anwenderspezifisches Bilddatenempfangsmittel, das in Entsprechung zu Anwenderidentifikationsinformation zum Identifizieren eines Anwenders, der die Maschine bedient, von einem anwenderspezifischen Bilddatenspeicherabschnitt, in dem Bilddaten von einer Instrumententafelbilderzeugungsvorrichtung nach Anspruch 1 oder 2 gespeichert worden sind, Bilddaten, denen die Anwenderidentifikationsinformation zugewiesen ist, empfängt, wobei die Anwenderidentifikationsinformation von einer externen Quelle ausgegeben wird; und
ein Anzeigemittel, das in Entsprechung zu den Bilddaten, die von dem anwenderspezifischen Bilddatenempfangsmittel empfangen werden, veranlasst, dass die Instrumententafel das Instrumententafelbild anzeigt.

4. Fahrzeug, an dem eine Instrumententafelbilderzeugungsvorrichtung nach Anspruch 1 montiert ist.

5. Instrumententafelbilderzeugungsverfahren zum Erzeugen eines Instrumententafelbildes, das an einer an einer Maschine montierten Instrumententafel angezeigt wird, umfassend die nachfolgenden Schritte:
(i) Zuweisen von Anwenderidentifikationsinformation zum Identifizieren eines bestimmten Anwenders, der die Maschine bedient, an das Instrumententafelbild codierende Bilddaten;
**dadurch gekennzeichnet dass** das Verfahren die nachfolgenden weiteren Schritte umfasst:
(ii) Speichern nur der Bilddaten, denen die Anwenderidentifikationsinformation in Schritt (i) zugewiesen wird, in einem anwenderspezifischen Bilddatenspeicherabschnitt;
wobei kein Instrumententafelbild in einem Fall angezeigt wird, in dem ein Anwender, der nicht der bestimmte Anwender ist, die Maschine bedient.

6. Instrumententafelbildanzeigeverfahren zum Anzeigen eines Instrumententafelbildes an einer an einer Maschine montierten Instrumententafel, umfassend die nachfolgenden Schritte:
(i) in Entsprechung zu Anwenderidentifikationsinformation zum Identifizieren eines Anwenders, der die Maschine bedient, erfolgendes Empfangen von Bilddaten, denen die Anwenderidentifikationsinformation zugewiesen ist, von einem anwenderspezifischen Bilddatenspeicherabschnitt, in dem Bilddaten durch ein Instrumententafelbilderzeugungsverfahren nach Anspruch 5 gespeichert worden sind, wobei die Anwenderidentifikationsinformation von einer externen Quelle ausgegeben wird; und
(ii) in Entsprechung zu den Bilddaten, die in Schritt (i) empfangen werden, erfolgendes Veranlassen, dass die Instrumententafel das Instrumententafelbild anzeigt.

7. Instrumententafelbilderzeugungsprogramm zum Bedienen einer Instrumententafelbilderzeugungsvorrichtung nach Anspruch 1 oder 2, wobei das Instrumententafelbilderzeugungsprogramm veranlasst, dass ein Computer als jedes der Mittel wirkt.

8. Computerlesbares Speichermedium, das ein Instrumententafelbilderzeugungsprogramm nach Anspruch 7 enthält.

## Revendications

1. Appareil de formation d'image de tableau de bord pour former une image de tableau de bord qui est affichée sur un tableau de bord monté sur une machine, comprenant :
un moyen d'attribution d'informations d'identification qui attribue à des données d'image encodant l'image de tableau de bord des informations d'identification d'utilisateur pour identifier un utilisateur particulier qui opère la machine ; et **caractérisé en ce qu'**il comprend en outre
un moyen de stockage de données d'image qui stocke dans une section de stockage de données d'image un utilisateur à la fois uniquement les données d'image auxquelles sont attribuées les informations d'identification d'utilisateur par le moyen d'attribution d'informations d'identification, et **en ce que**
aucune image de tableau de bord n'est affichée dans un cas où un utilisateur autre que l'utilisateur particulier opère la machine.

2. Appareil de formation d'image de tableau de bord selon la revendication 1, dans lequel :
l'appareil de formation d'image de tableau de bord est prévu en dehors de la machine ; et
le moyen de stockage de données d'image stocke dans la section de stockage de données d'image un utilisateur à la fois montée sur la machine les données d'image auxquelles sont attribuées les informations d'identification d'utilisateur par le moyen d'attribution d'informations d'identification.

3. Appareil d'affichage d'image de tableau de bord pour afficher une image de tableau de bord sur un tableau de bord monté sur une machine, comprenant :
un moyen d'acquisition de données d'image un utilisateur à la fois qui, conformément à des informations d'identification d'utilisateur pour identifier un utilisateur qui opère la machine, acquiert, depuis une section de stockage de données d'image un utilisateur à la fois dans laquelle des données d'image ont été stockées par un appareil de formation d'image de tableau de bord selon la revendication 1 ou 2, des données d'image auxquelles sont attribuées les informations d'identification d'utilisateur, les informations d'identification d'utilisateur étant émises depuis une source extérieure ; et
un moyen d'affichage qui, conformément aux données d'image acquises par le moyen d'acquisition de données d'image un utilisateur à la fois, fait afficher au tableau de bord l'image de tableau de bord.

4. Véhicule équipé d'un appareil de formation d'image de tableau de bord selon la revendication 1.

5. Procédé de formation d'image de tableau de bord pour former une image de tableau de bord qui est affichée sur un tableau de bord monté sur une machine, comprenant les étapes consistant à :
i attribuer à des données d'image encodant l'image de tableau de bord des informations d'identification d'utilisateur pour identifier un utilisateur particulier qui opère la machine ; et **caractérisé en ce que** ce procédé comprend les autres étapes suivantes :
ii stocker dans une section de stockage de données d'image un utilisateur à la fois uniquement les données d'image auxquelles sont attribuées les informations d'identification d'utilisateur à l'étape i
aucune image de tableau de bord n'est affichée dans un cas où un utilisateur autre que l'utilisateur particulier opère la machine.

6. Procédé d'affichage d'image de tableau de bord pour afficher une image de tableau de bord sur un tableau de bord monté sur une machine, comprenant les étapes consistant à :
i conformément à des informations d'identification d'utilisateur pour identifier un utilisateur qui opère la machine, acquérir, depuis une section de stockage de données d'image un utilisateur à la fois dans laquelle des données d'image ont été stockées par un procédé de formation d'image de tableau selon la revendication 5, des données d'image auxquelles sont attribuées les informations d'identification d'utilisateur, les informations d'identification d'utilisateur étant émises depuis une source extérieure ; et
ii conformément aux données d'image acquises à l'étape i, faire afficher au tableau de bord l'image de tableau de bord.

7. Programme de formation d'image de tableau de bord pour opérer un appareil de formation d'image de tableau de bord selon la revendication 1 ou 2, ledit programme de formation d'image de tableau de bord faisant fonctionner un ordinateur comme chacun des moyens.

8. Support de stockage lisible par ordinateur contenant un programme de formation d'image de tableau de bord selon la revendication 7.
